(19) Europäisches Patentamt
European Patent Office
Office européen des brevets

(11) **EP 2 634 148 B1**

(12) **EUROPEAN PATENT SPECIFICATION**

(45) Date of publication and mention
of the grant of the patent:
**01.04.2015 Bulletin 2015/14**

(21) Application number: **13156147.4**

(22) Date of filing: **21.02.2013**

(51) Int Cl.:
*H01M 4/131* (2010.01)   *H01M 4/36* (2006.01)
*H01M 4/505* (2010.01)   *H01M 4/525* (2010.01)
*C01G 51/04* (2006.01)   *C01G 53/00* (2006.01)
*H01M 10/052* (2010.01)

(54) **Active material for non-aqueous electrolyte secondary battery, method for production of the active material, electrode for non-aqueous electrolyte secondary battery and non-aqueous electrolyte secondary battery**

Aktivmaterial für eine Sekundärbatterie mit nichtwässrigem Elektrolyten, Verfahren zur Herstellung des Aktivmaterials, Elektrode für eine Sekundärbatterie mit nichtwässrigem Elektrolyten und Sekundärbatterie mit nichtwässrigem Elektrolyten

Matériau actif pour batterie secondaire à électrolyte non-aqueux, procédé de production du matériau actif, électrode pour batterie secondaire à électrolyte non-aqueux et batterie secondaire à électrolyte non-aqueux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2012 JP 2012045753**
**01.03.2012 JP 2012045754**

(43) Date of publication of application:
**04.09.2013 Bulletin 2013/36**

(73) Proprietor: **GS Yuasa International Ltd.**
**Kisshoin, Minami-ku,**
**Kyoto-shi, Kyoto 601-8520 (JP)**

(72) Inventor: **ENDO, Daisuke**
**Kyoto-shi, Kyoto 601-8520 (JP)**

(74) Representative: **Vossius & Partner**
**Siebertstrasse 3**
**81675 München (DE)**

(56) References cited:
**EP-A1- 2 405 521     JP-A- 2009 193 686**
**US-A1- 2008 090 150   US-A1- 2011 076 564**
**US-A1- 2012 009 474**

**Description**

The present invention relates to an active material for a nonaqueous electrolyte secondary battery, a method for production of the active material, and a nonaqueous electrolyte secondary battery using the active material.

For nonaqueous electrolyte secondary batteries, principally $LiCoO_2$. has been conventionally used as a positive active material. However, the discharge capacity is about 120 to 130 mAh/g.

Solid solutions of $LiCoO_2$ and other compounds are known as a positive active material for a nonaqueous electrolyte secondary battery. $Li[Co_{1-2x}Ni_xMn_x]O_2$ $(0 < x \le 1/2)$, a solid solution having an $\alpha$-$NaFeO_2$-type crystal structure and formed of three components: $LiCoO_2$, $LiNiO_2$ and $LiMnO_2$, was published in 2001. $LiNi_{1/2}Mn_{1/2}O_2$ or $LiCo_{1/3}Ni_{1/3}Mn_{1/3}O_2$ that is one example of the solid solution has a discharge capacity of 150 to 180 mAh/g, and is also excellent in terms of charge-discharge cycle performance.

In contrast with a so-called "$LiMeO_2$-type" active material as described above, a so-called "lithium-excess-type" active material is known in which the composition ratio Li/Me of lithium (Li) to a transition metal (Me) is greater than 1, with Li/Me being, for example, 1.25 to 1.6. This active material can be denoted as $Li_{1+\alpha}Me_{1-\alpha}O_2$ $(\alpha > 0)$. Here, $\beta = (1 + \alpha)/(1 - \alpha)$ if the composition ratio Li/Me of lithium (Li) to a transition metal (Me) is $\beta$, and therefore $\alpha = 0.2$ when Li/Me is 1.5.

JP-A-2010-086690 describes an active material which is one of such active materials and can be presented as a solid solution formed of three components: $Li[Li_{1/3}Mn_{2/3}]O_2$, $LiNi_{1/2}Mn_{1/2}O_2$ and $LiCoO_2$. Also, it is described that by providing a production step of carrying out charge that extends at least to a region having a relatively small potential change, which occurs at a positive electrode potential range of more than 4.3 V (vs. Li/Li$^+$) and 4.8 V (vs. Li/Li$^+$) or less, as a method for producing a battery using the active material, a battery can be produced with which a discharge capacity of 177 mAh/g or more is obtained even when such a charge method is employed that the maximum potential of a positive electrode during charge is 4.3 V (vs. Li/Li$^+$) or less.

Thus, unlike the so called "$LiMeO_2$-type" positive active material, the so called "lithium-excess-type" positive active material has such a feature that a high discharge capacity is obtained by carrying out at least initial charge at a relatively high potential of more than 4.3 V, particularly a potential of 4.4 V or more. However, this "lithium-excess-type" positive active material does not have sufficient high rate discharge characteristics. Particularly, the "lithium-excess-type" positive active material has such a tendency that the resistance increases in a low SOC region in the middle to last stage of discharge as compared to the "$LiMeO_2$-type" active material.

The invention, wherein the composition of a lithium-transition metal composite oxide is made different between the surface and the inner part of a positive active material particle to improve various characteristics, is known (see, for example, JP-A-2011-134670, JP-A-2011-134708, JP-A-2011-86603, JP-A-2010-80231, JP-A-2007-213866, JP-A-2006-302880 and JP-A-2012-18827).

JP-A-2011-134670 describes the invention of "a positive active material for a lithium secondary battery, comprising solid solution particles of a lithium-transition metal composite oxide represented by general formula: $LiMO_2$ (wherein M is one or two or more metal elements including at least one transition metal element selected from the group consisting of Co, Ni and Mn) and a lithium manganese oxide represented by $Li_2MnO_3$, wherein the positive active material has such a concentration gradient that the concentration of the $Li_2MnO_3$ is made higher than the concentration of the $LiMO_2$ as going toward the central part of the solid solution particle, and the concentration of the $LiMO_2$ is made higher than the concentration of the $Li_2MnO_3$ as going toward the outer surface of the solid solution particle" (claim 1). The invention has as an object the "provision of a positive active material for a lithium secondary battery having excellent load characteristics (characteristics of retaining a high capacity even during large current discharge) or excellent cycle performance (characteristics of retaining a high capacity even when charge-discharge is repeated) in which release of manganese is suppressed even when charge-discharge at a high rate is repeated" (paragraph [0007]), but since particles of lithium manganese oxide represented by $Li_2MnO_3$ are used as a starting raw material (claim 4 and Example), improvement of the load characteristics (high rate discharge characteristics) is not sufficient.

JP-A-2011-134708 describes the invention of a positive active material particle powder for a nonaqueous electrolyte secondary battery, wherein particles of at least one Li-Mn compound, the composition of which is selected from $Li_{x2}Mn_{2-y2}Ni_{y2}O_4$ -($0.95 \le x2 \le 1.10$ and $0.45 \le y2 \le 0.55$) or $Li_{x3}Mn_{1-y3}Fe_{y3}PO_4$ ($0.98 \le x3 \le 1.10$ and $0 < y3 \le 0.30$), is coated or situated at or near the surfaces of Li-Mn composite oxide particles that form a core (claim 1), but the invention has as an object "the provision of a positive active material particle powder for a nonaqueous electrolyte secondary battery, which has a high charge-discharge capacity during high voltage charge and is excellent in initial charge-discharge efficiency" (paragraph [0001]), rather than the improvement of the high rate discharge characteristics, and cobalt is not included at or near the surfaces of particles.

JP-A-2011-86603 describes the invention of "a composite electrode active material of a lithium battery, which comprises: main electrode active material particles containing lithium; and coated electrode active material particles containing lithium, the particle size of which is 1/10 of that of the main electrode active material, wherein the coated electrode active material particles containing lithium cover the outer surface of the main electrode active material particles, and are sintered" (claim 1). It is shown as Example that the surface of $LiNi_{0.75}Co_{0.2}Mg_{0.05}O_2$ is coated with $LiCoO_2$ and

that the surface of $LiMn_2O_4$ is coated with $LiCoO_2$ (paragraphs [0016] and [0017]), but it is only described that "by this composite material, the electrical conductivity and discharge efficiency of the battery are improved, and also the cycle life can be extended" (paragraph [0010]), and the high rate discharge characteristics are not mentioned, and it is not shown that the active material is of a "lithium-excess-type".

JP-A-2010-80231 describes the invention of "a positive active material raw material obtained by firing under an oxidation atmosphere a mixture of a precursor for a positive active material, in which the surfaces of nickel-cobalt composite hydroxide particles are coated with a sodium-containing cobalt compound layer including an amorphous moiety, and a lithium salt (claim 5). It is also described that "the inner part of the positive active material raw material comprises a lithium-nickel-cobalt composite oxide represented by $Li_xNi_{1-y}Co_yO_2$ ($0.9 \leq x \leq 1.1$ and $0 < y \leq 0.5$), the surface part of the positive active material comprises a sodium-containing lithium-cobalt composite oxide represented by $LixNi_{1-A-B}Co_ANa_BO_2$ ($0.9 \leq x \leq 1.1$, $0 < A \leq 1.0$ and $0 < B \leq 0.02$), and y is larger than A" (claim 6), but it is only described that by this invention, "a nonaqueous electrolyte secondary battery, which has a high capacity and is relatively inexpensive and excellent in safety, is obtained"(paragraph [0028]), and the high rate discharge characteristics are not mentioned, and it is not shown that manganese is included in the nickel-cobalt composite oxide.

JP-A-2007-213866 describes the invention of "a battery active material comprising at least two active material raw materials, wherein the raw material within particles has a core-shell-type structure, and the active material raw material of the shell part has a high power with respect to the active material raw material of the core part" (claim 1). It is also described that the active material raw material of the core part is one in which a part of nickel in $LiNiO_2$ is substituted with manganese, cobalt or the like, and that the active material raw material of the shell part is one in which a part of manganese in $LiMn_2O_4$ is substituted with cobalt or the like (claims 6 and 9), but the invention "has as an object the provision of a battery active material which is capable of sufficiently exploiting the characteristics of active material raw materials different in power performance and capacity performance, and a lithium ion secondary battery using the same" (paragraph [0006]), rather than the improvement of the high rate discharge characteristics, and it is not suggested that the active material is of a "lithium excess-type".

JP-A-2006-302880 describes the invention of an active material particle of a lithium ion secondary battery, wherein the active material particle contains a first lithium-nickel composite oxide that forms at least a core part thereof, the first lithium-nickel composite oxide is represented by $Li_xNi_{1-y-z}Co_yMe_zO_2$ (wherein $0.85 \leq x \leq 1.25$, $0 < y \leq 0.5$, $0 \leq z \leq 0.5$ and $0 < y + z \leq 0.75$, and the element Me is at least one selected from the group consisting of Al, Mn, Ti, Mg and Ca), the surface part of the active material particle contains a nickel oxide or second lithium-nickel composite oxide having a NaCl-type crystal structure, the surface part of the active material particle further contains an element M that is not incorporated in the crystal structure of the first lithium-nickel composite oxide, and the element M is at least one selected from the group consisting of Al, Mn, Mg, B, Zr, W, Nb, Ta, In, Mo and Sn (claim 1). The object of the invention is "to further improve stability at the time of internal short-circuit without inhibiting the high rate characteristics at low temperature" (paragraph [0012]), and $Li_xNi_{1-y-z}Co_yMe_zO_2$ is used as a starting raw material (claim 6 and Example), but since the activity of the nickel oxide or second lithium-nickel composite oxide having a NaCl-type crystal structure is low, the high rate characteristics (high rate discharge characteristics) are not excellent, and a large amount of cobalt is not included at the surface part of the particle.

JP-A-2012-18827 describes the invention of "a positive active material comprising secondary particles formed by agglomeration of primary particles that are lithium composite oxide particles having at least nickel (Ni) and cobalt (Co) as transition metals in the form of a solid solution, wherein the average composition of the total secondary particles is represented by formula 1, the abundance of the cobalt (Co) increases as going from the center to the surface of the primary particle, and the abundance of cobalt (Co) in the primary particles present near the surfaces of the secondary particles, of the primary particles that form the secondary particles, is greater than the abundance of cobalt (Co) in the primary particles present near the centers of secondary particles:

$$[\text{Formula 1}] \qquad Li_xCo_yNi_zM_{1-y-z}O_{b-a}X_a$$

wherein M is at least one element selected from boron (B), magnesium (Mg), aluminum (Al), silicon (Si), phosphorus (P), sulfur (S), titanium (Ti), chromium (Cr), manganese (Mn), iron (Fe), copper (Cu), zinc (Zn), gallium (Ga), germanium (Ge), yttrium (Y), zirconium (Zr), molybdenum (Mo), silver (Ag), barium (Ba), tungsten (W), indium (In), strontium (Sr), tin (Sn), lead (Pb) and antimony (Sb); X is a halogen atom; and x, y, z, a and b are values in ranges of $0.8 < x \leq 1.2$, $0 < y \leq 0.5$, $0.5 \leq z \leq 1.0$, $1.8 \leq b \leq 2.2$ and $0 \leq a \leq 1.0$, respectively." (claim 1), but the invention "has as an object the provision of a positive active material which helps increase the capacity and suppress gas generation at the same time, a positive electrode for a nonaqueous electrolyte battery, and a nonaqueous electrolyte battery" (paragraph [0013]), rather than the improvement of the high rate discharge characteristics, and it is not specifically described that Mn is included in the lithium composite oxide particle.

EP 2 405 521 A1 discloses a positive electrode active material for lithium secondary battery comprising a lithium nickel complex oxide material having a surface portion and a core portion, in which lithium ions are distributed in a concentration gradient decreasing from the surface portion to the core portion of the lithium nickel complex oxide material, wherein the lithium nickel complex oxide is represented by formula $Li_a[Ni_xCo_yMn_z]O_2$ (with $0.8 \leq a \leq 1.2$, $0.5 \leq x \leq 0.6$, $0.2 \leq y \leq 0.3$, $0.2 \leq z \leq 0.3$, and $x+y+z = 1$).

US 2011/076564 A1 describes a positive electrode active material comprising a lithiumrich lithium transition metal composite oxide particle represented by formula $Li_{1+x-s}Mn_{1-x-y}M_yO_{2-t}$ (where $0 < x < 0.33$, $0 < y < 0.66$, $0 < s < 0.3$, $0 < t < 0.15$, and M is at least one transition metal other than manganese), said particle comprising an inner portion having a layered structure and a surface adjacent portion having a crystal structure gradually changing from a layered structure to a spinel structure from an inner part thereof towards a surface part thereof, and the layered structure and the spinel structure having an identical ratio of Mn and M in the chemical formula.

JP 2009 193686 A discloses a positive electrode active material consisting of a coating layer containing microparticles of lithium-cobalt complex oxide and lithium-manganese complex oxide formed on the surface of primary particles of a lithium-metal complex oxide of formula $LiZNi_{1-x-y}Co_xM_yO_2$ (wherein $0.10 \leq x \leq 0.21$, $0 \leq y \leq 0.08$, $0.97 \leq z \leq 1.10$ and M is at least one element chosen from Mn, V, Mg, Mo, Nb, Ti and Al), wherein the molar ratio of cobalt and manganese in the coating layer is 0.7-0.9 atomic% with respect to the total amount of metal except lithium contained in the primary particles and the molar ratio of manganese with respect to the total amount of cobalt and manganese is 0.05-0.2.

An object of the present invention is to provide an active material for a nonaqueous electrolyte secondary battery, which is excellent in high rate discharge characteristics, a method for production of the active material, and a nonaqueous electrolyte secondary battery using the active material.

The present invention employs the following aspects for achieving the object described above.

(1) An active material for a nonaqueous electrolyte secondary battery, including a lithium-transition metal composite oxide which has an $\alpha$-NaFeO$_2$-type crystal structure and of which the average composition is represented by the composition formula of $Li_{1+\alpha}Ni_{1-\alpha}O_2$ (Me is a transition metal containing Co, Ni and Mn; and $\alpha > 0$), wherein the lithium-transition metal composite oxide is a particle having a core and a coated part, the cobalt concentration of the coated part is higher than the cobalt concentration of the core, the manganese concentration of the coated part is lower than the manganese concentration of the core, and the ratio of cobalt present in the coated part is 3 to 10% in terms of a molar ratio based on the amount of the transition metal present in the core.

(2) The active material for a nonaqueous electrolyte secondary battery in the aspect (1), wherein the lithium-transition metal composite oxide is formed by mixing a coprecipitation precursor of a transition metal compound and a lithium compound and firing the mixture.

(3) The active material for a nonaqueous electrolyte secondary battery in the aspect (1), wherein the coated part has a cobalt concentration gradient, and when the position of the surface is 0 and the position of the center is 1 in the particle, the start point of a cobalt concentration gradient region from the particle surface is situated at 0.1 to 0.5.

(4) The active material for a nonaqueous electrolyte secondary battery in the aspect (3), wherein a particle size, at which a cumulative volume in a particle size distribution of secondary particles of the lithium-transition metal composite oxide particles is 50%, is 8 $\mu$m or less.

(5) The active material for a nonaqueous electrolyte secondary battery in the aspect (3) or (4), wherein the lithium-transition metal composite oxide is formed by mixing a coprecipitation precursor of a transition metal compound and a lithium compound and firing the mixture.

(6) A method for production of the active material for a nonaqueous electrolyte secondary battery in the aspect (1) or (2), wherein the lithium-transition metal composite oxide is produced through a step of preparing coprecipitation precursor core particles by coprecipitating in an aqueous solution a transition metal compound containing cobalt, nickel and manganese and containing manganese in an amount larger than that of cobalt in terms of a molar ratio; a step of coating the coprecipitation precursor core particles with a compound containing cobalt, a compound containing cobalt and nickel, or a compound containing cobalt, nickel and manganese and containing cobalt in an amount larger than that of manganese in terms of a molar ratio, in the presence of an aqueous solution containing ammonia; and a step of mixing, with a lithium compound, coprecipitation precursor particles formed by coating the coprecipitation precursor core particles with the compound, and firing the mixture.

(7) A method for production of the active material for a nonaqueous electrolyte secondary battery in any one of the aspects (3) to (5), wherein the lithium-transition metal composite oxide is produced through a step of preparing coprecipitation precursor particles of a transition metal compound, which have a cobalt concentration gradient region from the particle surface, by adding, in the course of preparation of a coprecipitation precursor from a first aqueous solution of a transition metal compound containing cobalt, nickel and manganese, a second aqueous solution of a transition metal compound, which contains cobalt, nickel and manganese and has a higher cobalt concentration and a lower manganese concentration as compared to the first aqueous solution; and a step of mixing the coprecipitation precursor particles with a lithium compound, and firing the mixture.

(8) An electrode for a nonaqueous electrolyte secondary battery which includes the active material for a nonaqueous electrolyte secondary battery in any one of the aspects (1) to (5).
(9) A nonaqueous electrolyte secondary battery including the electrode for a nonaqueous electrolyte secondary battery in the aspect (8).

A nonaqueous electrolyte secondary battery excellent in high rate discharge characteristics can be provided by using the active materials in the aspects (1) and (2) of the present invention and an active material produced by the production method in the aspect (6) of the present invention.

A nonaqueous electrolyte secondary battery excellent in high rate discharge characteristics (particularly cycle performance) can be provided by using the active materials in the aspects (3) and (5) and an active material produced by the production method in the aspect (7) of the present invention.

A nonaqueous electrolyte secondary battery excellent in power characteristics in addition to high rate discharge characteristics can be provided by using the active material in the aspect (4) of the present invention.

According to the aspects (8) and (9) of the present invention, an electrode for a nonaqueous electrolyte secondary battery excellent in high rate discharge characteristics or also excellent in cycle performance of the high rate discharge and power characteristics can be provided.

The foregoing and other features of the invention will become apparent to one skilled in the art to which the present invention relates upon consideration of the invention with reference to the accompanying drawings, wherein:

Fig. 1 is a schematic view showing one example of a step of producing coprecipitation precursor particles of a transition metal compound by a production method of Example 1;
Fig. 2 is a schematic view showing one example of a step of producing coprecipitation precursor particles of a transition metal compound by a production method of Example 2;
Fig. 3 is a view showing a method for measuring a start point of a cobalt concentration gradient region from the particle surface for an active material for a nonaqueous electrolyte secondary battery of Example 2;
Fig. 4 is a view showing one example of the result of measuring a start point of a cobalt concentration gradient region from the particle surface for the active material for a nonaqueous electrolyte secondary battery of Example 2.

Preferred embodiments of the present invention will be described hereinafter.

The composition of a lithium-transition metal composite oxide contained in an active material for a nonaqueous electrolyte secondary battery according to the present invention is that of a so called "lithium-excess-type", which contains a transition metal element Me including Co, Ni and Mn as well as Li from the viewpoint of obtaining a high discharge capacity, and can be denoted as $Li_{1+\alpha}Me_{1-\alpha}O_2$ ($\alpha > 0$), but in the present invention, the composition is different between the surface (coated part) and the core of an active material particle as described below. The average composition is represented by the composition formula of $Li_{1+\alpha}Me_{1-\alpha}O_2$ (Me is a transition metal including Co, Ni and Mn, and $\alpha > 0$).

The ratio of elements such as Co, Ni and Mn which form a transition metal element that forms the lithium-transition metal composite oxide can be arbitrarily selected according to required characteristics.

The present invention is characterized in that the transition metal element Me including Co, Ni and Mn is not homogeneously distributed within one particle of a lithium-transition metal composite oxide (active material), but the lithium-transition metal composite oxide particle has a core and a coated part (shell), and in one particle, the Co concentration is higher in the coated part than in the core while conversely the Mn concentration is lower in the coated part than in the core. The high rate discharge characteristics are improved by ensuring that the ratio of Co present in the coated part is 3 to 10% in terms of a molar ratio based on the amount of transition metals (total amount of Co, Ni and Mn) present in the core as shown in Example described later. If the molar ratio of Co present in the coated part is less than 3% or more than 10%, improvement of the high rate discharge characteristics is not sufficient, and therefore the molar ratio of Co is preferably 3 to 10%

In Example 1, for making the Co concentration of the coated part higher than the Co concentration of the core, it is preferable to use precursor particles of a transition metal compound coated with a compound containing Co, precursor particles of a transition metal compound coated with a compound containing Co and Ni, or precursor particles of a transition metal compound coated with a compound containing Co, Ni and Mn and containing Co in an amount larger than that of Mn in terms of a molar ratio.

For improving cycle performance of high rate discharge, preferable are lithium-transition metal composite oxide particles in which the Co concentration is continuously changed within one particle. Thus, in Example 2, when the position of the surface is 0 and the position of the center is 1 in the particle, the start point of a cobalt concentration gradient region from the particle surface is situated at 0.1 to 0.5. The core is a region in which the cobalt concentration is homogeneous, and the coated part is a cobalt concentration gradient region.

In the present invention, the core of the lithium-transition metal composite oxide particle has a high Mn concentration and a low Co concentration, and is therefore of a so called "lithium-excess-ty-pe" represented by $Li_{1+a}(Co, Ni, Mn)_{1-\alpha}O_2$ ($\alpha > 0$), and shrinks during charge. On the other hand, the coated part of the particle has a high Co concentration and a low Mn concentration, in the case of a so called "$LiMeO_2$-type" represented by $Li(Co, Ni, Mn)O_2$, and expands during charge. Therefore, it is thought that due to cycle of charge-discharge, the two-phase boundary of the core and the coated part is deformed, so that separation easily occurs, but in Example 2, by forming lithium-transition metal composite oxide particles in which a composition difference occurring between two phases at the boundary of the two phases is small and the composition is continuously changed, separation is prevented, and cycle performance of high rate discharge is improved as compared to a nonaqueous electrolyte secondary battery using the lithium-transition metal composite oxide particles of Example 1.

The ratio of Mn present in the core is preferably higher than the total ratio of Co and Ni in terms of a molar ratio, and more preferably 62 to 72% in terms of a molar ratio based on the amount of transition metals present in the core (total amount of Co, Ni and Mn), from the viewpoint of being capable of obtaining a nonaqueous electrolyte secondary battery that has a high discharge capacity and is excellent in high rate discharge characteristics. On the other hand, the ratio of Co present in the core is preferably 2 to 23% in terms of a molar ratio based on the amount of the transition metals.

The ratio of Mn present in the coated part is preferably 0 to 10% based on the amount of the transition metals present in the core.

As described above, in the present invention, the composition is different between the core and the coated part, but by ensuring that for the core, the molar ratio of Li to the transition metal element Me (Li/Me), which is expressed by $(1+\alpha)/(1-\alpha)$ in the composition formula of $Li_{1+\alpha}Me_{1-\alpha}O_2$, is 1.2 or more and 1.6 or less, a nonaqueous electrolyte secondary battery having a high capacity can be obtained, and therefore the molar ratio Li/Me is preferably 1.2 to 1.6. Particularly, it is more preferable to select one having the Li/Me of 1.25 to 1.40 from the viewpoint of being capable of a nonaqueous electrolyte secondary battery which has an especially high discharge capacity and is excellent in high rate discharge characteristics.

The lithium-transition metal composite oxide according to the present invention is essentially a composite oxide containing Li, Co, Ni and Mn as metal elements, but inclusion of a small amount of other metals, such as alkali metals and alkali earth metals such as Na and Ca and transition metals represented by 3d transition metals such as Fe and Zn, within the bounds of not impairing the effect of the present invention is not excluded.

The lithium-transition metal composite oxide according to the present invention has an $\alpha$-$NaFeO_2$ structure. The lithium-transition metal composite oxide is attributable to $P3_112$ or R3-m as a space group. Among them, in those attributed to the space group $P3_112$, a superlattice peak (peak found in a $Li[Li_{1/3}Mn_{2/3}]O_2$-type monoclinic crystal) is observed at around $2\theta = 21°$ on an X-ray diffraction pattern using a $GuK\alpha$ radiation. However, when charge is carried out at least once, so that Li is extracted in the crystal, the symmetry of the crystal is changed, and consequently the superlattice peak disappears, and the lithium-transition metal composite oxide is attributed to the space group R3-m. Here, $P3_112$ is a crystal structure model in which atom positions at 3a, 3b and 6c sites in R3-m are subdivided, and the $P3_112$ model is employed when there is orderliness in atom arrangement in R3-m. Properly speaking, "R3-m" should be written with a bar "-" added above "3" of "R3m".

In the present invention, the half width of the (104) plane, when a space group by X-ray diffraction measurement using $CuK\alpha$ rays is considered as R3-m, is preferably 0.30 to 0.50° for improving the high rate discharge characteristics. The half width of the (104) plane tends to be large when the firing temperature is low, and small when the firing temperature is high. In the present invention, by carrying out firing at a temperature higher than 700°C and lower than 900°C, it is easy to ensure that the half width of the (104) plane is 0.30 to 0.50°.

In Example 2, the average particle size of lithium-transition metal composite oxide particles is preferably 8 $\mu$m or less for improving the power characteristics as well as the high rate discharge characteristics. It can be ensured that the average particle size is 8 $\mu$m or less by setting at 5 h or less the duration of stirring after completion of dropwise addition of a raw material aqueous solution in a precursor preparing step as shown in Example described later. If the average particle size is more than 8 $\mu$m, a nonaqueous electrolyte secondary battery using the lithium-transition metal composite oxide particles has a small initial high rate discharge capacity, but is excellent in cycle performance of high rate discharge.

A method for production of an active material for a nonaqueous electrolyte secondary battery in the present invention will now be described.

A method for production of an active material for a nonaqueous electrolyte secondary battery in Example 1 includes producing a lithium-transition metal composite oxide through a step of preparing coprecipitation precursor core particles by coprecipitating in an aqueous solution a transition metal compound containing Co, Ni and Mn and containing Mn in an amount larger than that of Co in terms of a molar ratio; coating the coprecipitation precursor core particles with a compound containing Co; and a step of mixing, with a lithium compound, coprecipitation precursor particles formed by coating the coprecipitation precursor core particles with the compound containing Co, and firing the mixture.

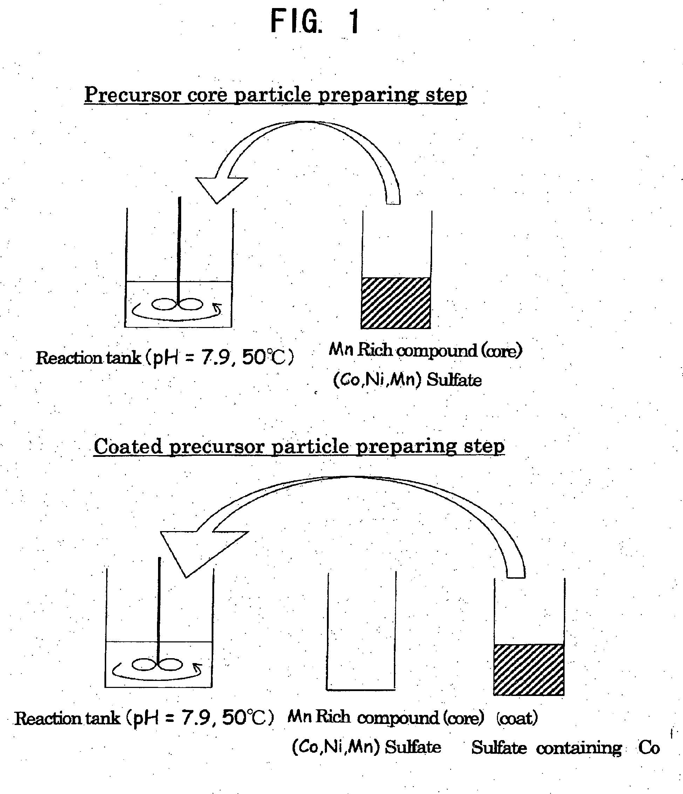

A step of producing coprecipitation precursor particles of a transition metal compound by this production method is shown in Fig. 1.

Instead of coating the coprecipitation precursor core particles with a compound containing Co, a method of coating the particles with a compound containing Co and Ni, or a method of coating the particles with a compound containing Co, Ni and Mn and containing Co in an amount larger than that of Mn in terms of molar ratio may be employed.

A method, in which after preparation of a Li-excess-type active material containing Li, this active material is set into a reaction tank and subjected to a coating treatment as described above, may be employed, but conditions should be selected so that the composition is not changed by elution of Li when the active material is set into the reaction tank, or the like.

In the step of coating the coprecipitation precursor core particles with a compound containing Co, or the like, it is preferable to coat the particles in the presence of an aqueous solution containing ammonia in order to ensure that the ratio of cobalt present on the particle surface is 3 to 10% in terms of a molar ratio based on the amount of transition metals present in the core (total amount of Co, Ni and Mn). When an aqueous solution containing ammonia is not used, the surface of the precursor core particle is hard to be coated with a hydroxide. As shown in Comparative Examples 1 to 5 in Example 1 described later, a lithium-transition metal composite oxide produced by a method, in which an aqueous solution containing ammonia is not used, is a mixture of "lithium-excess-ty-pe" particles and $LiCoO_2$ particles.

A method for production of an active material for a nonaqueous electrolyte secondary battery in Example 2 includes producing a lithium-transition metal composite oxide through a step of preparing coprecipitation precursor particles of a transition metal compound, which have a Co concentration gradient region from the particle surface, by adding, in the course of preparation of a coprecipitation precursor from a first aqueous solution of a transition metal compound containing Co, Ni and Mn, a second aqueous solution of a transition metal compound, which contains Co, Ni and Mn and has a higher Co concentration and a lower Mn concentration as compared to the first aqueous solution; and a step of mixing the coprecipitation precursor particles of the transition metal compound with a Li compound, and firing the mixture.

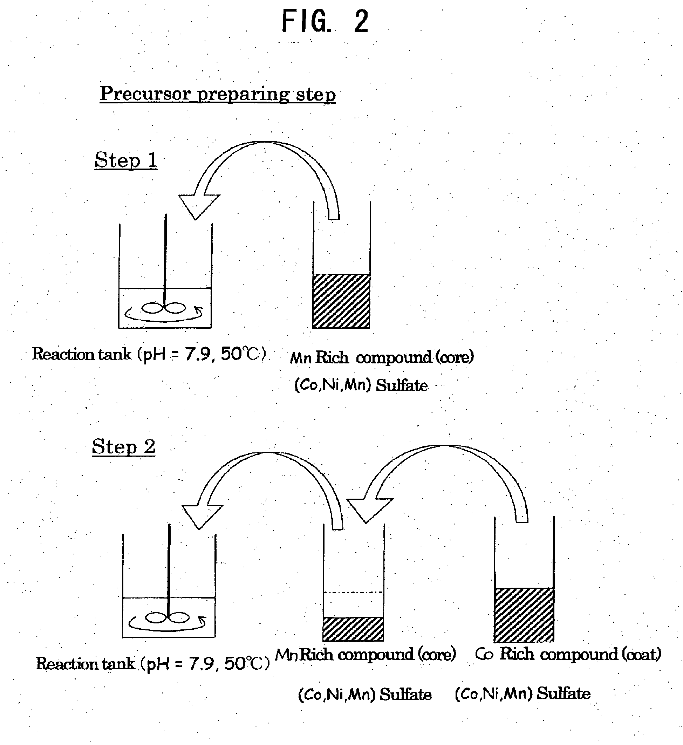

A step of producing coprecipitation precursor particles of a transition metal compound by this production method is shown in Fig. 2.

As one example, the following method may be employed.

A solution in a first container that contains a first aqueous solution of a transition metal compound containing Co, Ni and Mn is added dropwise, at a specified rate, to a reaction tank for preparing coprecipitation precursor particles, so that coprecipitation precursor core particles are prepared in the first place. Then, at the time when the residual amount of the solution in the first container reaches a specified amount, stirring of the first container is started, and a solution in a second container that sets a second aqueous solution of a transition metal compound containing Co, Ni and Mn, which has a higher Co concentration and a lower Mn concentration as compared to the first aqueous solution, is added dropwise to the first container at a constant rate. At this time, the specified rate (the rate at which the solution in the first container is added dropwise to the reaction tank) and the specified amount (the residual amount of the solution in the first container) are adjusted so that dropwise addition of the solution in the second container to the first container and dropwise addition of the solution in the first container to the reaction tank are completed almost at the same time.

Here, when the position of the surface is 0 and the position of the center is 1 in the coprecipitation precursor particle, the start point of a cobalt concentration gradient region from the particle surface is situated at 0.5 when dropwise addition of the solution in the second container to the first container is started at the time when 1/2 of dropwise addition of the solution in the first container to the reaction tank is completed; the start point of the cobalt concentration gradient region from the particle surface is situated at 0.25 when dropwise addition of the solution in the second container to the first container is started at the time when 3/4 of dropwise addition of the solution in the first container to the reaction tank is completed; and the start point of the cobalt concentration gradient region from the particle surface is situated at 0.125 when dropwise addition of the solution in the second container to the first container is started at the time when 7/8 of dropwise addition of the solution in the first container to the reaction tank is completed. In the manner described above, coprecipitation precursor particles can be prepared in which when the position of the surface is 0 and the position of the center is 1 in the coprecipitation precursor particle, the start point of the cobalt concentration gradient region from the particle surface is situated at 0.1 to 0.5, and the coprecipitation precursor particles can be used to prepare lithium-transition metal composite oxide particles having the same structure.

When coprecipitation precursor core particles are prepared, in Examples 1 and 2, Mn is easily oxidized among Co, Ni and Mn, so that it is not easy to prepare coprecipitation precursor core particles in which Co, Ni and Mn are homogeneously distributed in a divalent state, and therefore homogeneous mixing of Co, Ni and Mn at an element level tends to be insufficient. Particularly, in the composition range in Example described later, the ratio of Mn is high as compared to the ratios of Co and Ni, and therefore it is preferable to remove dissolved oxygen in an aqueous solution. Examples of the method for removing dissolved oxygen include a method in which a gas containing no oxygen is bubbled. The gas containing no oxygen is not limited, but a nitrogen gas, an argon gas, carbon dioxide ($CO_2$) or the like can be used. Particularly, when coprecipitation precursor core particles of a transition metal carbonate are prepared as in Example, employment of carbon dioxide as the gas containing no oxygen is preferable because an environment is provided in which the carbonate is more easily generated.

pH in the step of producing a precursor by coprecipitating in a solution a compound containing Co, Ni and Mn is not limited, but can be set at 7.5 to 11 when the coprecipitation precursor is prepared as a coprecipitation carbonate precursor. It is preferable to control pH for increasing the tap density. By setting pH at 9.4 or less, it can be ensured that the tap density is 1.25 g/cm$^3$ or more, so that high rate discharge performance can be improved. Further, by setting pH at 8.0 or less, the particle growth rate can be accelerated, so that the stirring duration after completion of dropwise addition of a raw material aqueous solution can be reduced.

The coprecipitation precursor core particle is preferably a compound with Mn, Ni and Co mixed homogeneously. In the present invention, the coprecipitation precursor core particle is preferably a carbonate for obtaining an active material for a nonaqueous secondary battery which has a high discharge capacity and is excellent in high rate discharge characteristics. A precursor having a higher bulk density can also be prepared by using a crystallization reaction using a complexing agent. At this time, by carrying out mixing/firing with a Li source, an active material having a high density can be obtained, so that the energy density per electrode area can be increased.

Examples of the raw material of the coprecipitation precursor may include manganese oxide, manganese carbonate, manganese sulfate, manganese nitrate and manganese acetate for the Mn compound, nickel hydroxide, nickel carbonate, nickel sulfate, nickel nitrate and nickel acetate for the Ni compound, and cobalt sulfate, cobalt nitrate and cobalt acetate for the Co compound.

In the reaction crystallization method, coprecipitation precursor core particles are obtained by adding dropwise a raw material aqueous solution of the coprecipitation precursor to a reaction tank that is kept alkaline, but here the rate of dropwise addition of the raw material aqueous solution significantly influences homogeneity of the element distribution within one particle of the generated coprecipitation precursor core particle. Particularly, Mn is hard to form a homogeneous element distribution with Co and Ni, and therefore requires care. For the preferred dropwise addition rate, it depends on the size of the reaction tank, stirring conditions, pH, the reaction temperature and so on, but is preferably 30 ml/min or less.

For increasing the discharge capacity, the dropwise addition rate is preferably 10 ml/min or less, more preferably 5 ml/min or less.

When a complexing agent is present in the reaction tank, and certain convection conditions are applied, rotation and revolution of particles, in a stirring tank, are promoted by further continuing stirring after completion of dropwise addition of the raw material aqueous solution, and in this process, particles are formed stepwise into a concentric circular sphere while colliding with one another. That is, coprecipitation precursor core particles are formed through reactions in two stages, i.e., a metal complex formation reaction when the raw material aqueous solution is added dropwise into the reaction tank and a precipitate formation reaction that the metal complex occurs during retention in the reaction tank. Therefore, by appropriately selecting a time during which stirring is further continued after completion of dropwise addition of the raw material aqueous solution, coprecipitation precursor core particles having a desired particle size can be obtained.

For the preferred time during which stirring is continued after completion of dropwise addition of the raw material aqueous solution, it depends on the size of the reaction tank, stirring conditions, pH, the reaction temperature and so on, but is, for example, preferably 0.5 h or more, more preferably 1 h or more, most preferably 3 h or more for growing particles as homogeneous spherical particles when the coprecipitation precursor is a carbonate. For reducing the possibility that the particle size is so large that the power performance of the battery is not sufficient, the time is preferably 15 h or less, more preferably 10 h or less, most preferably 5 h or less.

The active material for a nonaqueous electrolyte secondary battery of the present invention can be suitably prepared by mixing the coprecipitation precursor particles and a Li compound, followed by heat-treating the mixture. By using, as the Li compound, lithium hydroxide, lithium carbonate, lithium nitrate, lithium acetate or the like, the active material can be suitably produced. For the amount of the Li compound, however, it is preferable to charge the Li compound in an excessive amount by about 1 to 5% in consideration of elimination of a part thereof during firing.

The firing temperature influences the reversible capacity of the active material.

If the firing temperature is too high, there is such a tendency that the obtained active material is collapsed with an oxygen release reaction, and a phase defined as a $Li[Li_{1/3}Mn_{2/3}]O_2$ type of a monoclinic crystal, in addition to a hexagonal crystal as a main phase, tends to be observed as a separate phase rather than a solid solution phase. Inclusion of this separate phase in a too large amount is not preferable because the reversible capacity of the active material is reduced. In this active material, impurity peaks are observed at around 35° and at around 45° on the X-ray diffraction pattern. Therefore, the firing temperature is preferably lower than a temperature at which the oxygen release reaction of the active material is influential. The oxygen release temperature of the active material is generally 1000°C or higher in the composition range according to the present invention, but since the oxygen release temperature slightly varies depending on the composition of the active material, it is preferable to check the oxygen release temperature of the active material beforehand. Particularly, it should be noted that the oxygen release temperature has been found to shift toward the low temperature side as the amount of Co contained in a sample increases. As a method for checking the oxygen release temperature of the active material, a mixture of a coprecipitation precursor with a lithium compound may be subjected to thermogravimetric analysis (DTA-TG measurement) for simulating a firing reaction process, but in this method, platinum used in a sample chamber of a measuring instrument may be corroded by a volatilized Li component to damage the instrument, and therefore a composition that is crystallized to some degree beforehand by employing a firing temperature of about 500°C should be subjected to thermogravimetric analysis.

In the present invention, if the firing temperature is too high, the core and the shell may be no longer distinguished, leading to a homogeneous composition on the whole.

On the other hand, if the firing temperature is too low, there is such a tendency that crystallization does not sufficiently proceed, and the electrode characteristics are degraded. In the present invention, the firing temperature is preferably at least 700°C. By ensuring sufficient crystallization, the resistance of a crystal grain boundary can be reduced to facilitate smooth transportation of lithium ions.

The inventors precisely analyzed the half width of the diffraction peak of the active material of the present invention to find that a strain remained in a lattice in a sample synthesized at a temperature of up to 750°C, and the strain could be mostly removed by synthesizing the sample at a temperature higher than or equal to the synthesis temperature. The size of the crystallite was increased proportionally as the synthesis temperature was elevated. Therefore, in the composition of the active material of the present invention, a good discharge capacity was also obtained by aiming for particles in which little strain of the lattice is present in the system, and the crystallite size is sufficiently grown. Specifically, it has been found that it is preferable to employ such a synthesis temperature (firing temperature) that the amount of strain having an effect on the lattice constant is 2% or less, and the crystallite size is grown to 50 nm or more. When these particles are molded as an electrode and charge-discharge is performed, a change occurs due to expansion and contraction, but it is preferable as an effect that allows the crystallite size to be kept at 30 nm or more even in a charge-discharge process. That is, an active material having a significantly high reversible capacity can be obtained only by selecting the firing temperature so as to be as close as possible to the above-described oxygen release temperature of the active material.

As described above, the preferred firing temperature varies depending on the oxygen release temperature of the active material, and it is therefore difficult to uniformly set a preferred range of the firing temperature, but the firing temperature is preferably higher than 700°C and lower than 900°C, more preferably around 750 to 850°C, for making the discharge capacity sufficiently high to improve the high rate characteristics when the molar ratio of Li/Me is 1.2 to 1.6.

The nonaqueous electrolyte used in the nonaqueous electrolyte secondary battery according to the present invention is not limited, and those that are generally proposed to be used in lithium batteries and the like can be used. Examples of the nonaqueous solvent used in the nonaqueous electrolyte may include, but are not limited to, cyclic carbonates such as propylene carbonate, ethylene carbonate, butylene carbonate, chloroethylene carbonate and vinylene carbonate; cyclic esters such as $\gamma$-butyrolactone and $\gamma$-valerolactone; chain carbonates such as dimethyl carbonate, diethyl carbonate and ethylmethyl carbonate; chain esters such as methyl formate, methyl acetate and methyl butyrate; tetrahydrofuran or derivatives thereof; ethers such as 1,3-dioxane, 1,4-dioxane, 1,2-dimethoxyethane, 1,4-dibutoxyethane and methyl diglyme; nitriles such as acetonitrile and benzonitrile; dioxolane or derivatives thereof; and ethylene sulfide, sulfolane, sultone or derivatives thereof alone or mixtures of two or more thereof.

Examples of the electrolyte salt used in the nonaqueous electrolyte include inorganic ion salts including one of lithium (Li), sodium (Na) and potassium (K), such as $LiClO_4$, $LiBF_4$, $LiAsF_6$, $LiPF_6$, LiSCN, LiBr, LiI, $Li_2SO_4$, $Li_2B_{10}Cl_{10}$, $NaClO_4$, NaI, NaSCN, NaBr, $KClO_4$ and KSCN, and organic ion salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)4NI$, $(C_3H_7)_4NBr$, $(n\text{-}C_4H_9)_4NClO_4$, $(n\text{-}C_4H_9)_4NI$, $(C_2H_5)_4N$-maleate, $(C_2H_5)_4N$-benzoate, $(C_2H_5)_4N$-phthalate, lithium stearylsulfonate, lithium octylsulfonate and lithium dodecylbenzenesulfonate, and these ionic compounds can be used alone or in combination of two or more thereof.

Further, by mixing $LiPF_6$ or $LiBF_4$ with a lithium salt having a perfluoroalkyl group, such as LiN $(C_2F_5SO_2)_2$, the viscosity of the electrolyte can be further reduced, so that the low-temperature characteristics can be further improved, and self discharge can be suppressed, thus being more desirable.

A salt that is melted at ordinary temperature or an ion liquid may be used as a nonaqueous electrolyte.

The concentration of the electrolyte salt in the nonaqueous electrolyte is preferably 0.1 mol/l to 5 mol/l, further preferably 0.5 mol/l to 2.5 mol/l for reliably obtaining a nonaqueous electrolyte battery having high battery characteristics.

The negative electrode material is not limited, and may be freely selected as long as it can precipitate or absorb lithium ions. Examples thereof include titanium-based materials such as lithium titanate having a spinel-type crystal structure represented by $Li[Li_{1/3}Ti_{5/3}]O_4$, alloy-based materials such as Si-, Sb- and Sn-based alloy materials, lithium metals, lithium alloys (lithium metal-containing alloys such as lithium-silicon, lithium-aluminum, lithium-lead, lithium-tin, lithium-aluminum-tin, lithium-gallium and wood alloys), lithium composite oxides (lithium-titanium) and silicon oxide as well as alloys capable of absorbing/releasing lithium, and carbon materials (e.g., graphite, hard carbon, low temperature-fired carbon and amorphous carbon).

It is desirable that the powder of the positive active material and the powder of the negative electrode material have an average particle size of 100 μm or less. Particularly, it is desirable that the powder of the positive active material have a size of 10 μm or less for the purpose of improving the high power characteristics of the nonaqueous electrolyte battery. A crusher and a classifier are used for obtaining a powder in a predetermined shape. For example, a mortar, a ball mill, a sand mill, a vibration ball mill, a planet ball mill, a jet mill, a counter jet mill, a revolving airflow-type jet mill, a sieve or the like is used. At the time of crushing, wet crushing can also be used in which water, or an organic solvent such as hexane coexists. The classification method is not particularly limited, and a sieve, an air classifier or the like is used as necessary in both dry and wet processes.

The positive active material and the negative electrode material which are main components of the positive electrode and the negative electrode have been described in detail above, but the positive electrode and negative electrode may contain, in addition to the main components, a conducting agent, a binder, a thickener, a filler and the like as other components.

The conducting agent is not limited as long as it is an electron-conductive material that has no adverse effect on battery performance, but normally conductive materials such as natural graphite (scaly graphite, flake graphite, earthy graphite, etc.), artificial graphite, carbon black, acetylene black, ketjen black, carbon whisker, carbon fibers, metal (copper, nickel, aluminum, silver, gold, etc.) powders, metal fibers and conductive ceramic materials can be included alone or as a mixture thereof.

Among them, acetylene black is desirable as a conducting agent from the viewpoints of electron conductivity and coating properties. The added amount of the conducting agent is preferably 0.1% by weight to 50% by weight, especially preferably 0.5% by weight to 30% by weight based on the total weight of the positive electrode or negative electrode. Particularly, use of acetylene black crushed into ultrafine particles of 0.1 to 0.5 $\mu$m is desirable because the required amount of carbon can be reduced. These mixing methods involve physical mixing, the ideal of which is homogeneous mixing. Thus, mixing can be carried out in a dry process or a wet process using a powder mixer such as a V-type mixer, an S-type mixer, a grinder, a ball mill or a planet ball mill.

As the binder, thermoplastic resins such as polytetrafluoroethylene (PTFE), polyvinylidene fluoride (PVDF), polyethylene and polypropylene, and polymers having rubber elasticity, such as ethylene-propylene-diene terpolymer (EPDM), sulfonated EPDM, styrene-butadiene rubber (SBR) and fluororubber can normally be used alone or as a mixture of two or more thereof. The added amount of the binder is preferably 1 to 50% by weight, especially preferably 2 to 30% by weight based on the total weight of the positive electrode or negative electrode.

The filler may be any material as long as it has no adverse effect on battery performance. An olefin-based polymer such as polypropylene or polyethylene, amorphous silica, alumina, zeolite, glass, carbon or the like is normally used. The added amount of the filler is preferably 30% by weight or less based on the total amount of the positive electrode or the negative electrode.

The positive electrode and the negative electrode are suitably prepared by kneading the aforementioned main components (positive active material in the positive electrode and negative electrode material in the negative electrode) and other materials to form a mixture, and mixing the mixture with an organic solvent, such as N-methylpyrrolidone or toluene, or water, followed by applying or contact-bonding the resulting mixed liquid onto a current collector that is described in detail below, and carrying out a heating treatment at a temperature of about 50°C to 250°C for about 2 hours. For the applying method, for example, it is desirable to perform applying in any thickness and any shape using means such as roller coating by an applicator roll or the like, screen coating, a doctor blade system, spin coating or a bar coater, but the applying method is not limited thereto.

As a separator, it is preferable that a porous membrane, a nonwoven fabric or the like, which shows excellent high rate discharge performance, be used alone or in combination. Examples of the material that forms the separator for a nonaqueous electrolyte battery may include polyolefin-based resins represented by polyethylene, polypropylene and the like, polyester-based resins represented by polyethylene terephthalate, polybutylene terephthalate and the like, polyvinylidene fluoride, vinylidene fluoride-hexafluoropropylene copolymers, vinylidene fluoride-perfluoro vinyl ether copolymers, vinylidene fluoride-tetrafluoroethylene copolymers, vinylidene fluoride-trifluoroethylene copolymers, vinylidene fluoride-fluoroethylene copolymers, vinylidene fluoride-hexafluoroacetone copolymers, vinylidene fluoride-ethylene copolymers, vinylidene fluoride-propylene copolymers, vinylidene fluoride-trifluoropropylene copolymers, vinylidene fluoride-tetrafluoroethylene-hexafluoropropylene copolymers and vinylidene fluoride-ethylene-tetrafluoroethylene copolymers.

The porosity of the separator is preferably 98% by volume or less from the viewpoint of the strength. The porosity is preferably 20% by volume or more from the viewpoint of charge-discharge characteristics.

For the separator, for example, a polymer gel formed of acrylonitrile, ethylene oxide, propylene oxide, methyl methacrylate, vinyl acetate, vinyl pyrrolidone or a polymer such as poly(fluoride vinylidene) and an electrolyte may be used. Use of the nonaqueous electrolyte in a gel form as described above is preferable from the viewpoint of being effective to prevent liquid leakage.

Further, for the separator, use of the porous membrane, nonwoven fabric or the like in combination with the polymer gel is desirable because liquid retainability of the electrolyte is improved. That is, a film with the surface and the microporous wall face of a polyethylene microporous membrane coated with a solvophilic polymer in a thickness of several $\mu$m or less is formed, and an electrolyte is held within micropores of the film, so that the solvophilic polymer is formed into a gel.

Examples of the solvophilic polymer include, in addition to poly(fluoride vinylidene), polymers in which an acrylate monomer having an ethylene oxide group, an ester group or the like, an epoxy monomer, a monomer having an isocyanate group, or the like is crosslinked. The monomer can be subjected to a crosslinking reaction by carrying out heating or using ultraviolet rays (UV) while using a radical initiator at the same time, or using active light rays such as electron beams (EB), or the like.

The configuration of the nonaqueous electrolyte secondary battery is not particularly limited, and examples thereof include a cylindrical battery having a positive electrode, a negative electrode and a roll-shaped separator, a prismatic battery and a flat battery.

Both the conventional positive active material and the active material of the present invention are capable of charge-discharge at a positive electrode potential of around 4.5 V (vs. Li/Li$^+$). However, depending on the type of using nonaqueous electrolyte, the nonaqueous electrolyte may be oxidatively decomposed to cause deterioration of battery performance because the positive electrode potential during charge is too high. A nonaqueous electrolyte secondary battery, with which a sufficient discharge capacity is obtained even when such a charge method that the maximum potential of the positive electrode during charge is 4.3 V (vs. Li/Li$^+$) or less is employed at the time of operation, may be required. If the active material of the present invention is used, a discharge electrical amount, which exceeds the capacity of the conventional positive active material, i.e., about 200 mAh/g, can be obtained even when such a charge method that the maximum potential of the positive electrode during charge is lower than 4.5 V (vs. Li/Li$^+$), for example, 4.4 (vs. Li/Li$^+$) or less or 4.3 (vs. Li/Li$^+$) or less is employed at the time of user operation.

For the positive active material according to the present invention to have a high discharge capacity, the ratio, at which transition metal elements that form a lithium-transition metal composite oxide are present in areas other than transition metal sites of a layered rock-salt-type crystal structure, is preferably low. This can be achieved by ensuring that in precursor particles that are subjected to a firing step, transition metal elements such as Co, Ni and Mn in precursor core particles are sufficiently homogeneously distributed, and selecting suitable conditions for the firing step for promoting crystallization of an active material. If distribution of transition metals in precursor core particles that are subjected to the firing step is not homogeneous, a sufficient discharge capacity is not obtained. The reason for this is not necessarily clear, but the present inventors infer that this results from occurrence of so called cation mixing in which the obtained lithium-transition metal composite oxide has some of transition metal elements present in areas other than transition metal sites of the layered rock-salt-type crystal structure, i.e., lithium sites if the distribution of transition metals in precursor core particles that are subjected to the firing step is not homogeneous. A similar inference can be applied in a crystallization process in the firing step, wherein cation mixing in the layered rock-salt-type crystal structure easily occurs if crystallization of the active material is insufficient. Those in which the homogeneity of the distribution of the transition metal elements is high tend to have a high intensity ratio of diffraction peaks of the (003) plane and the (104) plane when the result of X-ray diffraction measurement is attributed to a space group R3-m. In the present invention, the intensity ratio of diffraction peaks of the (003) plane and the (104) plane from X-ray diffraction measurement is preferably $I_{(003)}/I_{(104)} \geq 1.0$. The intensity ratio is preferably $I_{(003)}/I_{(104)} > 1$ in a state of complete discharge after charge-discharge. If synthesis conditions and synthesis procedures for the precursor are inappropriate, the peak intensity ratio is a smaller value, which is often less than 1.

By employing the synthesis conditions and synthesis procedures described in the specification of the present application, a positive active material having high performance as described above can be obtained. Particularly, there can be provided a positive active material for a nonaqueous electrolyte secondary battery with which a high discharge capacity can be obtained even when the charge upper limit potential of positive electrode is set to lower than 4.5, e.g., a charge upper limit potential such as 4.4 V or 4.3 V is set.

[Example 1]

Concerning Example 1, examples of production of an active material for a nonaqueous electrolyte secondary battery by a method using precursor particles of a transition metal compound coated with a compound containing cobalt as Examples 1-1 to 1-5, a method using precursor particles of a transition metal compound coated with a compound containing cobalt and nickel as Example 1-6, and a method using precursor particles of a transition metal compound coated with a compound containing cobalt, nickel and manganese and containing cobalt in an amount larger than that of manganese in terms of a molar ratio as Example 1-7 will be shown below along with Comparative Examples.

(Example 1-1)

[Precursor core particle preparing step]

Cobalt sulfate heptahydrate, nickel sulfate hexahydrate and manganese sulfate pentahydrate were dissolved in 200 ml of ion-exchanged water to prepare a 2.00 mol/l aqueous sulfate solution of which the molar ratio of Co : Ni :

Mn was 12.5 : 19.94 : 67.56.

Ion-exchanged water (750 ml) was poured into a 2 L reaction tank, and a $CO_2$ gas was bubbled for 30 min to thereby dissolve $CO_2$ in ion-exchanged water. The temperature of the reaction tank was set at 50°C ($\pm$2°C), and the aqueous sulfate solution was added dropwise at a rate of 3 ml/min while the content in the reaction tank was stirred at a rotation speed of 700 rpm using a paddle impeller equipped with a stirring motor. Here, control was performed so that pH in the reaction tank was constantly kept at 7.9 ($\pm$0.05) by appropriately adding dropwise an aqueous solution containing a 2.00 mol/l aqueous sodium carbonate solution and 0.4 mol/l ammonia over a time period between the start and the end of dropwise addition. After completion of dropwise addition, stirring the content in the reaction tank was continued for additional 3h. After stirring was stopped, the reaction tank was left standing for 12 h or more.

Next, particles of a coprecipitation carbonate generated in the reaction tank were separated using a suction filtration device, sodium ions attached on the particles were further washed out with ion-exchanged water, and the particles were dried at 100°C under normal pressure in an air atmosphere using an electric furnace. Thereafter, the particles were crushed by an automatic mortar made of agate for several minutes for equalizing the particle size. In this way, precursor core particles were prepared.

[Coated precursor particle preparing step]

Ion-exchanged water (750 ml) was poured into a 2 L reaction tank, 10 g of the precursor core particles were set thereinto, and the content in the reaction tank was started to be stirred at a rotation speed of 700 rpm using a paddle impeller equipped with a stirring motor. Dissolved oxygen in ion-exchanged water was removed by bubbling an Ar gas into the reaction tank for 30 min. The temperature of the reaction tank was set at 50°C ($\pm$2°C), and 100 ml of an aqueous solution having 1.391 g of cobalt sulfate heptahydrate dissolved therein was added dropwise at a rate of 3 ml/min while stirring was continued. Here, control was performed so that pH in the reaction tank was constantly kept at 9.0 ($\pm$0.05) by appropriately adding dropwise an aqueous solution containing a 0.1 mol/l aqueous sodium hydroxide solution and 0.05 mol/l ammonia over a time period between the start and the end of dropwise addition. After completion of dropwise addition, stirring the content in the reaction tank was continued for additional 1h. After stirring was stopped, the reaction tank was left standing for 12 h or more.

Next, particles in the reaction tank were separated using a suction filtration device, sodium ions attached on the particles were further washed out with ion-exchanged water, and the particles were dried at 80°C for 20 h under normal pressure in an air atmosphere using a dryer. Thereafter, the particles were crushed by an automatic mortar made of agate for several minutes for equalizing the particle size. In this way, coated precursor particles constituted such that the surfaces of precursor core particles formed of a coprecipitation carbonate were coated with a cobalt hydroxide were prepared.

[Firing step]

Lithium carbonate (0.960 g) was added to 2.261 g of the coated precursor particles, and the resultant was adequately mixed using an automatic mortar made of agate to prepare a mixed powder of which the molar ratio of Li : (Co, Ni, Mn) was 128.6 : 100. The powder was molded at a pressure of 6 MPa using a pellet molding machine to form a pellet having a diameter of 25 mm. The amount of the mixed powder subjected to pellet molding was determined by performing conversion calculation so that the mass as an expected final product would be 2 g. One of the pellets was placed in an alumina boat having a total length of about 100 mm, the boat was placed in a box-type electric furnace (model: AMF 20), the temperature was elevated from ordinary temperature to 800°C under normal pressure in an air atmosphere over about 10 hours (temperature elevation rate of 80°C/h), and the pellet was fired at 800°C for 4h. The box-type electric furnace had an internal dimension of 10 cm (height), 20 cm (width) and 30 cm (depth), and was provided with electrically-heated wires at intervals of 20 cm in the width direction. After firing, a heater was switched off, and the alumina boat was naturally cooled as it was left standing in the furnace. As a result, the temperature of the furnace decreased to about 200°C after 5 hours, but the subsequent temperature fall rate was slightly low. After elapse of a whole day and night, the pellet was taken out after confirming that the temperature of the furnace was not higher than 100°C, and crushed by an automatic mortar made of agate for several minutes for equalizing the particle size. In this way, a lithium-transition metal composite oxide according to Example 1-1 was prepared.

(Example 1-2)

A lithium-transition metal composite oxide according to Example 1-2 was prepared in the same manner as in Example 1-1 except that the temperature was elevated from ordinary temperature to 850°C over about 10 hours (temperature elevation rate of 85°C/h), and the pellet was fired at 850°C for 4 h in the firing step.

(Example 1-3)

A lithium-transition metal composite oxide according to Example 1-3 was prepared in the same manner as in Example 1-1 except that the mass of cobalt sulfate heptahydrate was 0.835 g in the coated precursor particle preparing step, and a mixed powder, of which the molar ratio of Li : (Co, Ni, Mn) was 129.1 : 100, was prepared in the firing step.

(Example 1-4)

A lithium-transition metal composite oxide according to Example 1-4 was prepared in the same manner as in Example 1-1 except that the mass of cobalt sulfate heptahydrate was 2.782 g in the coated precursor particle preparing step, and a mixed powder, of which the molar ratio of Li : (Co, Ni, Mn) was 127 : 100, was prepared in the firing step.

(Example 1-5)

A lithium-transition metal composite oxide according to Example 1-5 was prepared in the same manner as in Example 1-1 except that a 2.00 mol/l aqueous sulfate solution, of which the molar ratio of Co : Ni : Mn was 12.5 : 18.0 : 69.5, was prepared in the coated precursor particle preparing step, and a mixed powder, of which the molar ratio of Li : (Co, Ni, Mn) was 123.7 : 100, was prepared in the firing step.

(Example 1-6)

A lithium-transition metal composite oxide according to Example 1-6 was prepared in the same manner as in Example 1-1 except that "100 ml of an aqueous solution having 0.6956 g of cobalt sulfate heptahydrate and 0.6504 g of nickel sulfate hexahydrate dissolved therein" was used in place of "100 ml of an aqueous solution having 1.391 g of cobalt sulfate heptahydrate dissolved therein" in the coated precursor particle preparing step, and a mixed powder, of which the molar ratio of Li : (Co, Ni, Mn) was 128.6 : 100, was prepared in the firing step.

(Example 1-7)

A lithium-transition metal composite oxide according to Example 1-7 was prepared in the same manner as in Example 1-1 except that "100 ml of an aqueous solution having 0.9274 g of cobalt sulfate heptahydrate, 0.2168 g of nickel sulfate hexahydrate and 0.1988 g of manganese sulfate pentahydrate dissolved therein" was used in place of "100 ml of an aqueous solution having 1.391 g of cobalt sulfate heptahydrate dissolved therein" in the coated precursor particle preparing step, and 2.286 g of the coprecipitation carbonate precursor and 0.9602 g of lithium carbonate were mixed to prepare a mixed powder of which the molar ratio of Li : (Co, Ni, Mn) was 128.4 : 100 in the firing step.

(Comparative example 1-1)

A lithium-transition metal composite oxide according to Comparative Example 1-1 was prepared in the same manner as in Example 1-1 except that the coated precursor particle preparing step was not provided and in the firing step, 2.268 g of the precursor core particles obtained in Example 1 and 0.970 g of lithium carbonate were mixed to prepare a mixed powder of which the molar ratio of Li : (Co, Ni, Mn) was 130 : 100, and the firing temperature was 900°C.

(Comparative example 1-2)

A lithium-transition metal composite oxide according to Comparative Example 1-2 was prepared in the same manner as in Example 1-1 except that the mass of cobalt sulfate heptahydrate was 4.173 g in the coated precursor particle preparing step, and a mixed powder, of which the molar ratio of Li : (Co, Ni, Mn) was 125.5 : 100, was prepared in the firing step.

(Comparative example 1-3)

A lithium-transition metal composite oxide according to Comparative Example 1-3 was prepared in the same manner as in Example 1-1 except that the mass of cobalt sulfate heptahydrate was 5.565 g in the coated precursor particle preparing step, and a mixed powder, of which the molar ratio of Li : (Co, Ni, Mn) was 124.5 : 100, was prepared in the firing step

(Comparative example 1-4)

A lithium-transition metal composite oxide according to Comparative Example 1-4 was prepared in the same manner as in Example 1-1 except that 1.193 g of manganese sulfate pentahydrate was used in place of cobalt sulfate heptahydrate in the coated precursor particle preparing step, and a mixed powder, of which the molar ratio of Li : (Co, Ni, Mn) was 128.6 : 100, was prepared in the firing step.

(Comparative example 1-5)

A lithium-transition metal composite oxide according to Comparative Example 1-5 was prepared in the same manner as in Example 1-1 except that an aqueous solution containing ammonia was not used, but only a 0.1 mol/l aqueous sodium hydroxide solution was used for controlling pH in the reaction tank in the coated precursor particle preparing step, and a mixed powder, of which the molar ratio of Li : (Co, Ni, Mn) was 128.6 : 100, was prepared in the firing step.

[Example 2]

Examples of production of an active material for a nonaqueous electrolyte secondary battery for obtaining active material particles in which the Co concentration is continuously changed within one particle will be shown below as Example 2 along with Comparative Examples.

(Example 2-1)

[Precursor preparing step]

Cobalt sulfate heptahydrate, nickel sulfate hexahydrate and manganese sulfate pentahydrate were dissolved in 200 ml of ion-exchanged water to prepare a 2.00 mol/l aqueous sulfate solution of which the molar ratio of Co : Ni : Mn was 12.5 : 19.94 : 67.56. This is designated as a "first aqueous sulfate solution".

Cobalt sulfate heptahydrate, nickel sulfate hexahydrate and manganese sulfate pentahydrate were dissolved in 200 ml of ion-exchanged water to prepare a 0.20 mol/l aqueous sulfate solution of which the molar ratio of Co : Ni : Mn was 66.67 : 16.67 : 16.67. This is designated as a "second aqueous sulfate solution".

Ion-exchanged water (750 ml) was poured into a 2 L reaction tank, and a $CO_2$ gas was bubbled for 30 min to thereby dissolve $CO_2$ in ion-exchanged water. The temperature of the reaction tank was set at 50°C ($\pm$2°C). The content in the reaction tank was started to be stirred at a rotation speed of 700 rpm using a paddle impeller equipped with a stirring motor. Subsequently, control was performed so that pH in the reaction tank was constantly kept at 7.9 ($\pm$0.05) by appropriately adding dropwise an aqueous solution containing a 2.00 mol/l aqueous sodium carbonate solution and 0.4 mol/l ammonia until dropwise addition of all the aqueous solution to the reaction tank was completed.

The solution in a first beaker containing the "first aqueous sulfate solution" was added dropwise to the reaction tank at a rate of 4.5 ml/min using a tubing pump. At the time when the residual amount of the solution in the first beaker reached 100 ml, stirring of the content in the first beaker was started, and the solution in a second beaker containing the "second aqueous sulfate solution" was added dropwise to the first beaker at a rate of 3 ml/min using a tubing pump. As a result, dropwise addition of the solution in the second beaker to the first beaker and dropwise addition of the solution in the first beaker to the reaction tank were completed almost at the same time. After completion of dropwise addition, stirring the content in the reaction tank was continued for additional 3h. After stirring was stopped, the reaction tank was left standing for 12 h or more.

Next, particles of a coprecipitation carbonate generated in the reaction tank were separated using a suction filtration device, sodium ions attached on the particles were further washed out with ion-exchanged water, and the particles were dried at 80°C for 20 h under normal pressure in an air atmosphere using a dryer. Thereafter, the particles were crushed by an automatic mortar made of agate for several minutes for equalizing the particle size. In this way, a coprecipitation carbonate precursor was prepared.

[Firing step]

Lithium carbonate (0.960 g) was added to 2.286 g of the coprecipitation carbonate precursor, and the resultant was adequately mixed using an automatic mortar made of agate to prepare a mixed powder of which the molar ratio of Li : (Co, Ni, Mn) was 128.4 : 100. The powder was molded at a pressure of 6 MPa using a pellet molding machine to form a pellet having a diameter of 25 mm. The amount of the mixed powder subjected to pellet molding was determined by performing conversion calculation so that the mass as an expected final product would be 2 g. One of the pellets was placed in an alumina boat having a total length of about 100 mm, the boat was placed in a box-type electric furnace (model: AMF 20), the temperature was elevated from ordinary temperature to 800°C under normal pressure in an air atmosphere over about 10 hours (temperature elevation rate of 80°C/h), and the pellet was fired at 800°C for 4h. The box-type electric furnace had an internal dimension of 10 cm (height), 20 cm (width) and 30 cm (depth), and was provided with electrically-heated wires at intervals of 20 cm in the width direction. After firing, a heater was switched off, and the alumina boat was naturally cooled as it was left standing in the furnace. As a result, the temperature of the furnace decreased to about 200°C after 5 hours, but the subsequent temperature fall rate was slightly low. After elapse of a whole day and night, the pellet was taken out after confirming that the temperature of the furnace was not higher than 100°C, and crushed by an automatic mortar made of agate for several minutes for equalizing the particle size. In this way, a lithium-transition metal composite oxide according to Example 2-1 was prepared.

(Example 2-2)

A lithium-transition metal composite oxide according to Example 2-2 was prepared in the same manner as in Example 2-1 except that the solution in the first beaker containing the "first aqueous sulfate solution" was added dropwise to the reaction tank at a rate of 3.75 ml/min using a tubing pump, and at the time when the residual amount of the solution in the first beaker reached 50 ml, the solution in the second beaker containing the "second aqueous sulfate solution" was added dropwise to the first beaker at a rate of 3 ml/min using a tubing pump in the precursor preparing step.

(Example 2-3)

A lithium-transition metal composite oxide according to Example 2-3 was prepared in the same manner as in Example 2-1 except that the solution in the first beaker containing the "first aqueous sulfate solution" was added dropwise to the reaction tank at a rate of 3.375 ml/min using a tubing pump, and at the time when the residual amount of the solution in the first beaker reached 25 ml, the solution in the second beaker containing the "second aqueous sulfate solution" was added dropwise to the first beaker at a rate of 3 ml/min using a tubing pump in the precursor preparing step.

(Example 2-4)

A lithium-transition metal composite oxide according to Example 2-4 was prepared in the same manner as in Example 2-3 except that a 0.40 mol/l aqueous sulfate solution, of which the molar ratio of Co : Ni : Mn was 66.67 : 16.67 : 16.67, was used as the "second aqueous sulfate solution" in the precursor preparing step, and a mixed powder, of which the molar ratio of Li : (Co, Ni, Mn) was 126.9 : 100, was prepared in the firing step.

(Example 2-5)

A lithium-transition metal composite oxide according to Example 2-5 was prepared in the same manner as in Example 2-2 except that the molar ratio of Co : Ni : Mn was 12.5 : 18.0 : 69.5 as the "first aqueous sulfate solution" in the precursor preparing step, and a mixed powder, of which the molar ratio of Li : (Co, Ni, Mn) was 123.5 : 100, was prepared in the firing step.

(Example 2-6)

A lithium-transition metal composite oxide according to Example 2-6 was prepared in the same manner as in Example 2-2 except that a 0.20 mol/l aqueous sulfate solution, of which the molar ratio of Co : Ni : Mn was 50.0 : 30.0 : 20.0, was used as the "second aqueous sulfate solution" in the precursor preparing step, and a mixed powder, of which the molar ratio of Li : (Co, Ni, Mn) was 128.4 : 100, was prepared in the firing step

(Example 2-7)

A lithium-transition metal composite oxide according to Example 2-7 in the same manner as in Example 2-2 except that the time during which stirring of the content in the reaction tank was additionally continued after completion of dropwise addition was 1 h in the precursor preparing step, and a mixed powder, of which the molar ratio of Li : (Co, Ni, Mn) was 128.4 : 100, was prepared in the firing step.

(Example 2-8)

A lithium-transition metal composite oxide according to Example 2-8 in the same manner as in Example 2-2 except that the time during which stirring of the content in the reaction tank was additionally continued after completion of dropwise addition was 5 h in the precursor preparing step.

(Example 2-9)

A lithium-transition metal composite oxide according to Example 2-9 in the same manner as in Example 2-2 except that the time during which stirring of the content in the reaction tank was additionally continued after completion of dropwise addition was 10 h in the precursor preparing step.

(Comparative example 2-1)

Cobalt sulfate heptahydrate, nickel sulfate hexahydrate and manganese sulfate pentahydrate were dissolved in 200 ml of ion-exchanged water to prepare a 2.00 mol/l aqueous sulfate solution of which the molar ratio of Co : Ni : Mn was 12.5 : 19.94 : 67.56.

Ion-exchanged water (750 ml) was poured into a 2 L reaction tank, and a $CO_2$ gas was bubbled for 30 min to thereby dissolve $CO_2$ in ion-exchanged water. The temperature of the reaction tank was set at 50°C ($\pm$2°C).

The content in the reaction tank was started to be stirred at a rotation speed of 700 rpm using a paddle impeller equipped with a stirring motor. Subsequently, control was performed so that pH in the reaction tank was constantly kept at 7.9 ($\pm$0.05) by appropriately adding dropwise an aqueous solution containing a 2.00 mol/l aqueous sodium carbonate solution and 0.4 mol/l ammonia until dropwise addition of all the aqueous solution to the reaction tank was completed.

The solution in a first beaker containing the aqueous sulfate solution was added dropwise to the reaction tank at a rate of 3 ml/min using a tubing pump. After the whole amount of the aqueous sulfate solution was added dropwise, stirring of the content in the reaction tank was continued for additional 3 h.

Next, particles of a coprecipitation carbonate generated in the reaction tank were separated using a suction filtration device, sodium ions deposited on the particles were further washed out with ion-exchanged water, and the particles were dried at 80°C for 20 h under normal pressure in an air atmosphere using a dryer. Thereafter, the particles were crushed by an automatic mortar made of agate for several minutes for equalizing the particle size. In this way, a coprecipitation carbonate precursor was prepared.

A lithium-transition metal composite oxide according to Comparative Example 2-1 was prepared in the same manner as in Example 2-1 except that 2.278 g of the coprecipitation carbonate precursor and 0.970 g of lithium carbonate were mixed to prepare a mixed powder, of which the molar ratio of Li : (Co, Ni, Mn) was 130 : 100, in the firing step.

(Comparative example 2-2)

A lithium-transition metal composite oxide according to Comparative Example 2-2 was prepared in the same manner as in Example 2-1 except that the solution in the first beaker containing the "first aqueous sulfate solution" was added dropwise to the reaction tank at a rate of 6 ml/min using a tubing pump, and concurrently with the start of the aforementioned dropwise addition, the solution in the second beaker containing the "second aqueous sulfate solution" was added dropwise to the first beaker at a rate of 3 ml/min using a tubing pump in the precursor preparing step.

<Measurement of half width of (104) plane by X-ray diffraction measurement>

For the lithium-transition metal composite oxides of all Examples and Comparative Examples, X-ray diffraction measurements were made using Rigaku "MiniFilex II". The radiation source was CuK$\alpha$, and the acceleration voltage and current were 30 kV and 15 mA, respectively. For the obtained X-ray diffraction data, a half width was determined for the diffraction peak present at around 44 to 45° using "PDXL", attached software of the measuring apparatus.

<Measurement of Co concentration gradient region from particle surface>

For each of the lithium-transition metal composite oxides according to Examples 2-1 to 2-9 and Comparative Examples 2-1 and 2-2, the metal composition ratio from the particle surface to the inner part of the particle in accordance with the following procedure using a scanning electron microscope (SEM) (model JSM-6360 manufactured by JEOL Ltd.) and an energy dispersive X-ray spectrometry (EDX) apparatus (hereinafter also referred to as a "SEM-EDX apparatus").

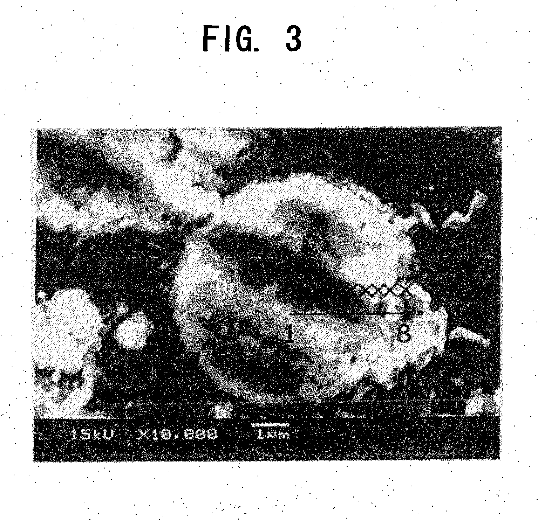

Powder particles of a lithium-transition metal composite oxide to be measured were taken in an appropriate amount by a spatula and charged into a ring made of an acryl resin (outer diameter: 10 mm and inner diameter: 8 mm), and cured by introducing a two-component epoxy resin for curing. Next, polishing was carried out so as to expose the cross sections of the powder particles using a polishing machine (GPM GRINDING & POLISHING manufactured by Wingo Seiki Co., Ltd.) and Emily Sandpaper (#180), and finally surface polishing was carried out using Emily Sandpaper (#1000). Platinum was deposited on the polished surfaces, and the particles were set in the SEM-EDX apparatus. The working distance at the analysis position was 10 mm, and the acceleration voltage of an electron gun was 15 kV. Particles suitable for cross-section observation, of which the cross section including the center of the particle was exposed on the observation surface, were selected through SEM observation. Analysis object elements were Co, Ni and Mn. As shown in Fig. 3, 8 measurement points were provided at equal intervals with the central part of the particle as Point 1 and the surface part of the particle as Point 8, and at each measurement point of Point 1 to Point 8, the ratio of the molar concentration of each of Co, Ni and Mn was calculated based on the sum of the molar concentrations of Co, Ni and Mn.

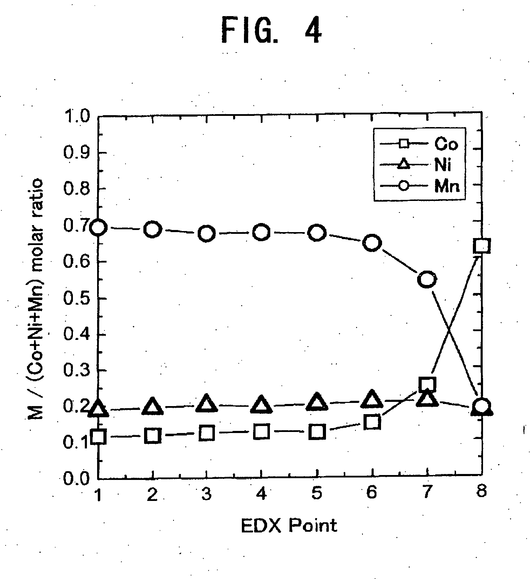

As one example, the result of measurement for the lithium-transition metal composite oxide according to Example 2-2 is shown in Fig. 4. Next, the procedure for determining a "start point of a cobalt concentration gradient region from the particle surface" is described with Fig. 3 as an example. In Fig. 3, the concentration ratio of cobalt (Co) gradually decreases over a range of from Point 8 at the particle surface to Point 6 in the inner part of the particle, and the concentration ratio of each analysis object element is constant over a range of from Point 5 to Point 1 at the central part of the particle. In this case, the range of from Point 8 to Point 6 is defined as a "cobalt concentration gradient region from the particle surface". When it is determined in this way that the "cobalt concentration gradient region" is a range of from Point 8 to Point x, a value determined in accordance with the following formula is defined as a "start point of the cobalt concentration gradient region from the particle surface".

Start point of cobalt concentration gradient region from particle surface = (8 - x)/8.

Thus, in the example of Fig. 4, the value of the "start point of cobalt (Co) concentration gradient from particle surface" is 0.250.

The concentration ratio of an analysis object element being constant is defined as a change in ratio of the molar concentration of Co based on the sum of the molar concentrations of Co, Ni and Mn being within $\pm$ 5% with respect to Point 1 and a continuous rise in concentration not being observed over a range of from the central part to the surface part of the particle

<Measurement of particle size>

For the lithium-transition metal composite oxides according to all Examples and Comparative Examples, particle size distribution measurements were made in accordance with the following conditions and procedure. Microtrac (model: MT 3000) manufactured by Nikkiso Co., Ltd. was used as a measuring apparatus. The measuring apparatus includes an optical stage, a sample supply section and a computer including control software, and a wet cell provided with a laser light transmission window is placed on the optical stage. For the measurement principle, a wet cell, through which a dispersion with a measurement object sample dispersed in a dispersive solvent is circulated, is irradiated with laser light, and a distribution of scattered light from the measurement sample is converted into a particle size distribution. The dispersion is stored in a sample supply section, and cyclically supplied to the wet cell by a pump. The sample supply section constantly receives ultrasonic vibrations. Water was used as a dispersive solvent. Microtrac DHS for Win 98 (MT 3000) was used as measurement control software. For "substance information" set and input in the measuring apparatus, a value of 1.33 was set as the "refractive index" of the solvent, "Transparent" was selected as the "transparency", and "Nonspherical" was selected as the "spherical particle". A "Set Zero" operation was performed prior to measurement of the sample. The "Set Zero" operation is an operation for subtracting influences on subsequent measurements of disturbance factors (glass, contamination of the glass wall face, glass irregularities, etc.) other than scattered light from particles, wherein only water as a dispersive solvent is fed in a sample supply section, a background measurement is made with only water as a dispersive solvent being circulated through a wet cell, and background data is stored in a computer. Subsequently, a "Sample LD (Sample Loading)" operation is performed. The Sample LD operation is an operation for optimizing the concentration of a sample in a dispersion that is cyclically supplied to a wet cell during measurement, wherein a measurement object sample is manually charged into a sample supply section in accordance with instructions of measurement control software until an optimum amount is reached. Subsequently, a "measurement" button is depressed, so that a measurement operation is performed. The measurement operation is repeated twice and as an average thereof, a measurement result is output from a control computer. The measurement result is acquired as a particle size distribution histogram, and the values of D10, D50 and D90 (D10, D50 and D90 are particle sizes at which the cumulative volumes in the particle size distribution of secondary particles are 10%, 50% and 90%, respectively). Values of D50 measured are shown in Tables 1 and 2.

<Assembly and evaluation of nonaqueous electrolyte secondary battery>

The lithium-transition metal composite oxide of each of all Examples and Comparative Examples was used as a positive active material for a nonaqueous electrolyte secondary battery to assemble a nonaqueous electrolyte secondary battery in accordance with the following procedure, and battery characteristics were evaluated.

A positive active material, acetylene black (AB) and polyvinylidene fluoride (PVdF) were mixed at a ratio of 85 : 8 : 7 in terms of a mass ratio. The mixture was kneaded and dispersed with N-methylpyrrolidone added as a dispersion medium to prepare an application liquid. For PVdF, solid weight conversion calculation was performed using a liquid having a solid dissolved and dispersed therein. The application liquid was applied to an aluminum foil current collector having a thickness of 20 $\mu$m to prepare a positive electrode plate.

For the counter electrode (negative electrode), a lithium metal was used for observing an independent behavior of the positive electrode. The lithium metal was brought into close contact with a nickel foil current collector. However, an adjustment was made so that the capacity of the nonaqueous electrolyte secondary battery would adequately regulate the positive electrode.

As an electrolyte solution, a solution obtained by dissolving $LiPF_6$, in a concentration of 1 mol/l, in a mixed solvent of EC/EMC/DMC in a volume ratio of 6 : 7 : 7, was used. As a separator, a microporous membrane made of polypropylene, the surface of which was modified with polyacrylate to improve electrolyte solution retainability, was used. A nickel plate, to which a lithium metal foil was attached, was used as a reference electrode. As a outer case, a metal resin composite film made of polyethylene terephthalate (15 $\mu$m)/aluminum foil (50 $\mu$m)/metal-adhesive polypropylene film (50 $\mu$m) was used. In a dry room with a dew point of -40°C or lower, the electrode was stored such that the open ends of a terminal, a negative electrode terminal and a reference electrode terminal were externally exposed, and fusion margins with the inner surfaces of the aforementioned metal resin composite films facing each other were airtightly sealed except a portion forming an electrolyte solution filling hole. The electrolyte solution in an amount enough for the assembled battery not to suffer from a liquid shortage was injected in an equal amount into each battery from the electrolyte solution filling hole, and thereafter the electrolyte solution filling hole was thermally sealed under a reduced pressure to assemble a lithium secondary battery.

For the nonaqueous electrolyte secondary battery prepared in the manner described above, 2 cycles of an initial charge-discharge step were carried out at 25°C. Voltage control was all performed for the positive electrode potential. Charge was constant current-constant voltage charge with a current of 0.1 CmA and a voltage of 4.6 V. The charge termination condition was set at a time point at which the current value decreased to 0.02 CmA. Discharge was constant-current discharge with a current of 0.1 CmA and a final voltage of 2.0 V. In all the cycles, a rest time of 30 minutes was set after charge and after discharge. In this way, nonaqueous electrolyte secondary batteries according to Examples and Comparative Examples were completed.

For the completed nonaqueous electrolyte secondary battery, 3 cycles of charge-discharge were carried out. Voltage control was all performed for the positive electrode potential. Conditions for the charge-discharge cycle are the same as the conditions for the initial charge-discharge step except that the charge voltage was 4.3 V (vs. Li/Li$^+$). In all the cycles, a rest time of 30 minutes was set after charge and after discharge. Here, the discharge capacity in the third cycle was recorded as a "discharge capacity (0.1 C) (mAh/g)".

[High rate discharge test]

Next, a high rate discharge test was conducted in accordance with the following procedure. First, constant-current and constant-voltage charge with a current of 0.1 CmA and a voltage of 4.3 V was carried out. After 30 minutes of rest, constant-current discharge with a current of 1 CmA and a final voltage of 2.0 V was carried out, and the discharge capacity at this time was recorded as an "initial high rate discharge capacity (mAh/g)".

The ratio of the "initial high rate discharge capacity (mAh/g)" to the "discharge capacity (0.1 C) (mAh/g)" was recorded as "high rate discharge characteristics (%)".

Further, for the nonaqueous electrolyte secondary battery using as a positive active material the lithium-transition metal composite oxide according to each of Examples 2-1 to 2-9 and Comparative Examples 2-1 and 2-2, 30 cycles of the high rate discharge test were carried out, and the ratio of a high rate discharge capacity after 30 cycles to the "initial high rate discharge capacity (mAh/g)" was recorded as a "high rate discharge capacity retention ratio (%) after 30 cycles".

[Power performance test in low SOC region]

For the nonaqueous electrolyte secondary battery using as a positive active material the lithium-transition metal composite oxide according to each of Examples 2-1 to 2-9 and Comparative Examples 2-1 and 2-2, a power performance test in a low SOC region was conducted in the following manner.

After the high rate discharge test, constant-current and constant-voltage charge with a current of 0.1 CmA and a voltage of 4.3 V was carried out, and a charge electrical amount at this time was recorded. After 30 minutes of rest, constant-current discharge with a current of 0.1 CmA was carried out, and discharge was paused at the time when a current in an electrical amount of 70% with respect to the aforementioned charge electrical amount was passed.

Thirty minutes after the rest of discharge, a test of carrying out discharge for 1 second at each rate of discharge current was conducted. Specifically, first, discharge was carried out at a current of 0.1 CmA for 1 second, and after 2 minutes of rest, auxiliary charge was carried out at a current of 0.1 CmA for 1 second. Further after 2 minutes of rest, discharge was carried out at a current of 1 CmA for 1 second, and after 2 minutes of rest, auxiliary charge was carried out at a current of 0.1 CmA for 10 seconds. Further after 2 minutes of rest, discharge was carried out at a current of 2 CmA for 1 second, and after 2 minutes of rest, auxiliary charge was carried out at a current of 0.1 CmA for 20 seconds. From the result thereof, a voltage drop 1 second after each rate of discharge was plotted against the current value, fitting was performed by a least square method, and E0, i.e., a pseudo-value at a discharge rate of 0, and a direct current resistance R were calculated from the intercept and gradient, respectively, of the resulting graph. A power at SOC 30% was determined from the following formula on the assumption that the discharge final voltage was 2.5 V. The result thereof was recorded as an "initial power (W)".

$$\text{SOC 30\% power (W)} = 2.5 \times (E0 - 2.5)/R$$

Thirty cycles of the power performance test were carried out, and the ratio of a power after 30 cycles to the "initial power (W)" was recorded as a "power retention ratio (%) after 30 cycles".

For Examples 1-1 to 1-7 and Comparative Examples 1-1 to 1-5, the results of measurement of the half width of the (104) plane, particle size, discharge capacity (0.1C) and high rate discharge characteristics described above are shown in Table 1.

[Table 1]

| | Coated part Co/core Me (%) | Firing temperature (°C) | (104) plane half width ° (degrees) | Particle size (μm) | Discharge capacity (0.1C) (mAh/g) | High rate discharge characteristics (%) |
|---|---|---|---|---|---|---|
| Example 1-1 | 5 | 800 | 0.379 | 8 | 228 | 83.3 |
| Example 1-2 | 5 | 850 | 0.333 | 8 | 228 | 83.3 |
| Example 1-3 | 3 | 800 | 0.381 | 8 | 227 | 83.3 |
| Example 1-4 | 10 | 800 | 0.376 | 8 | 218 | 87.2 |
| Example 1-5 | 5 | 800 | 0.380 | 8 | 225 | 83.6 |
| Example 1-6 | 5 | 800 | 0.382 | 8 | 228 | 81.1 |
| Example 1-7 | 5 | 800 | 0.376 | 8 | 228 | 82.3 |
| Comparative example 1-1 | 0 | 900 | 0.278 | 8 | 226 | 74.3 |
| Comparative example 1-2 | 15 | 800 | 0.374 | 8 | 210 | 76.1 |
| Comparative example 1-3 | 20 | 800 | 0.371 | 8 | 205 | 74.6 |
| Comparative example 1-4 | - | 800 | 0.379 | 8 | 197 | 64.9 |
| Comparative example 1-5 | - | 800 | 0.378 | 8 | 220 | 74.1 |

From Table 1, the following is apparent.

A nonaqueous electrolyte secondary battery using a lithium-transition metal composite oxide (active material), of which the molar ratio of coated part Co/core Me is 3 to 10%, the lithium-transition metal composite oxide obtained by mixing, with lithium carbonate, coated precursor particles formed by coating precursor core particles of a transition metal carbonate with a cobalt hydroxide, coated precursor particles formed by coating the precursor core particles with a hydroxide of cobalt and nickel, or coated precursor particles formed by coating the precursor core particles with a hydroxide containing cobalt, nickel and manganese and containing cobalt in an amount larger than that of manganese in terms of a molar ratio, and firing the mixture at 800°C, or 50°C, has improved high rate discharge characteristics (Examples 1-1 to 1-7) as compared to a nonaqueous electrolyte secondary battery using an active material obtained by mixing, with lithium carbonate, precursor particles that are not coated with a cobalt hydroxide or the like, and firing the mixture in the same manner as described above (Comparative Example 1-1).

When a lithium-transition metal composite oxide (active material), of which the molar ratio of coated part Co/core Me is more than 10% and is 15% or 20%, is used, improvement of the high rate discharge characteristics is not sufficient (Comparative Examples 1-2 and 1-3).

When coated precursor particles formed by coating precursor core particles of a transition metal carbonate with a manganese hydroxide are used, the discharge capacity is low and the high rate discharge characteristics are deteriorated (Comparative Example 1-4).

When an aqueous solution containing ammonia is not used for coating precursor core particles of a transition metal carbonate with a cobalt hydroxide, the precursor core particles are not coated with Co, "lithium-excess-type" particles and $LiCoO_2$ particles are separately generated, and the high rate discharge characteristics are not improved (Comparative Example 1-5).

For Examples 2-1 to 2-9 and Comparative Examples 2-1 and 2-2, the results of measurement of the (104) plane half width, particle size, initial efficiency discharge capacity, initial power, high rate discharge capacity retention ratio after 30 cycles and power retention ratio after 30 cycles are shown in Table 2. Further, the measurement results obtained by the "measurement of a Co concentration gradient region from the particle surface" as described above are also shown in Table 2.

[Table 2]

| | Coated part Co/core Me (%) | Firing temperature (°C) | Co concentration gradient region from particle surface | (104) plane half width ° (degrees) | Particle size (μm) | Initial high rate discharge capacity (mAh/g) | Initial power (W) | High rate discharge capacity retention ratio after 30 cycles (%) | Power retention ratio after 30 cycles (%) |
|---|---|---|---|---|---|---|---|---|---|
| Example 2-1 | 5 | 800 | 0.500 | 0.378 | 8 | 186 | 28 | 92 | 93 |
| Example 2-2 | 5 | 800 | 0.250 | 0.376 | 8 | 188 | 29 | 93 | 94 |
| Example 2-3 | 5 | 800 | 0.125 | 0.375 | 8 | 189 | 30 | 94 | 95 |
| Example 2-4 | 10 | 800 | 0.125 | 0.371 | 8 | 188 | 29 | 91 | 95 |
| Example 2-5 | 5 | 800 | 0.250 | 0.372 | 8 | 185 | 28 | 90 | 92 |
| Example 2-6 | 5 | 800 | 0.250 | 0.381 | 8 | 185 | 25 | 90 | 90 |
| Example 2-7 | 5 | 800 | 0.250 | 0.374 | 5 | 187 | 32 | 91 | 94 |
| Example 2-8 | 5 | 800 | 0.250 | 0.377 | 13 | 165 | 18 | 92 | 91 |
| Example 2-9 | 5 | 800 | 0.250 | 0.374 | 18 | 161 | 16 | 92 | 92 |
| Comparative example 2-1 | 0 | 800 | 0.000 | 0.379 | 8 | 168 | 17 | 87 | 88 |
| Comparative example 2-2 | 5 | 800 | 1.000 | 0.368 | 8 | 158 | 12 | 91 | 89 |

From the example in Fig. 4 and the results in Table 2, it has been found that the metal composition over a range of from the particle surface to the inner part of the particle, for each of the lithium-transition metal composite oxides according to Examples 2-1 to 2-9 and Comparative Examples 2-1 and 2-2, is directly influenced by the metal composition ratios of the "first aqueous sulfate solution" and "second aqueous sulfate solution" used in the step of preparing the coprecipitation carbonate precursor, and the procedure of adding these aqueous sulfate solutions dropwise to the reaction tank.

That is, for a lithium-transition metal composite oxide obtained by, when preparing each coprecipitation carbonate precursor in Examples 2-1 to 2-9, starting dropwise addition of a solution in a second beaker (second aqueous sulfate solution having a higher Co concentration and a lower Mn concentration as compared to a first aqueous sulfate solution, and containing Co, Ni and Mn) to a first beaker at the time when 1/2 of dropwise addition of a solution in the first beaker (first aqueous sulfate solution containing Co, Ni and Mn) to a reaction tank to thereby form a coprecipitation carbonate precursor, mixing the coprecipitation carbonate precursor with lithium carbonate, and firing the mixture at 800°C, when the position of the surface is 0 and the position of the center is 1 in the particle, the start point of the Co concentration gradient region from the particle surface is situated at 0.500. When similarly dropwise addition is started at the time of completion of 3/4, the start point of the Co concentration gradient region from the particle surface is situated at 0.250, and when similarly dropwise addition is started at the time of completion of 7/8, the start point of the Co concentration gradient region from the particle surface is situated at 0.125. The molar ratio of coated part Co/core Me is 10% in Example 2-4, and 5% in other Examples.

When the time during which stirring of the content in the reaction tank is additionally continued after completion of dropwise addition is 3 h or less, D50, i.e., a particle size, at which the cumulative volume in the particle size distribution of secondary particles of the lithium-transition metal composite oxide is 50%, is 8 $\mu$m or less, and by using this lithium-transition metal composite oxide as an active material, a nonaqueous electrolyte secondary battery excellent in initial high rate discharge capacity, initial power, high rate discharge capacity retention ratio after 30 cycles and power retention ratio is obtained (Examples 2-1 to 2-7).

When the time during which stirring of the content in the reaction tank is additionally continued after completion of dropwise addition is 5 h and 10 h, the particle size D50 of the lithium-transition metal composite oxide increases to 13 $\mu$m and 18 $\mu$m, respectively. A nonaqueous electrolyte secondary battery using this lithium-transition metal composite oxide as an active material (Examples 2-8 and 2-9) does not have an improved initial high rate discharge capacity and initial power, but has a higher high rate discharge capacity retention ratio after 30 cycles and power retention ratio, and improved cycle performance of high rate discharge, as compared to a nonaqueous electrolyte battery using as an active material a homogeneous lithium-transition metal composite oxide having no Co concentration gradient region from the particle surface (no coated part) (Comparative

Example 2-1).

When dropwise addition is started at the same time, a homogeneous lithium-transition metal composite oxide is formed, but a nonaqueous electrolyte secondary battery using this lithium-transition metal composite oxide as an active material (Comparative Example 2-2) has a low initial high rate discharge capacity.

In Examples described above, the method for measuring the Co concentration gradient region of the lithium-transition metal composite oxide of the invention of the present application and the values of $D_{10}$, $D_{50}$ and $D_{90}$ in the particle size distribution of secondary particles have been described on the basis of the results of measurement of the particle size distribution for the lithium-transition metal composite oxide before preparation of the electrode. However, for a nonaqueous electrolyte secondary battery having a history of charge-discharge, the Co concentration gradient region can be measured and the values of $D_{10}$, $D_{50}$ and $D_{90}$ described above can be determined by carrying out a treatment in accordance with the procedure described below.

First, an operation is carried out in which a battery is subjected to constant current discharge with a current value of 0.1 CmA and a final voltage of 2.0 V and thereafter disassembled in an environment with a dew point of -20°C, a positive electrode is taken out, and thereafter a cell is formed between the positive electrode and a negative electrode capable of releasing lithium ions in an amount required for sufficiently bringing the positive electrode into a state of complete discharge in order to ensure that a positive active material contained in the positive electrode is in a state of complete discharge, so that the positive electrode is discharged. Metal lithium is preferably used as the negative electrode. The cell may be a two-terminal cell, but preferably a three-terminal cell provided with a reference electrode is used to control and monitor the positive electrode potential with respect to the reference electrode. An electrolyte solution used in the cell preferably has a composition identical to that of a nonaqueous electrolyte used in the nonaqueous electrolyte secondary battery wherever possible. Examples of the operation for discharging a positive electrode using the cell include a method in which continuous discharge or intermittent discharge is carried out with a current of 0.1 CmA or less and a discharge final potential of 2.0 V (vs. Li/Li$^+$). After the discharge operation is carried out, a sufficient rest time is provided to confirm that the open circuit potential is 3.0 V (vs. Li/Li$^+$) or less. If the open circuit potential after the discharge operation is more than 3.0 V (vs. Li/Li$^+$), it is required to employ a lower discharge current value and repeat the operation until the open circuit potential reaches 3.0 V (vs. Li/Li$^+$) or less.

After the positive electrode is subjected to this operation, the cell is disassembled and taken out, and thereafter a attached electrolyte solution is removed. Examples of the method for removing the electrolyte solution include cleaning with a volatile solvent. The volatile solvent is preferably one in which a lithium salt is easily dissolved. Specific examples include dimethyl carbonate (DMC). It is desirable that for the volatile solvent, one, of which the water content is reduced to a lithium battery grade, be used.

A composite part is scraped off from the positive electrode after drying, the composite is impregnated with a resin, after which the Co concentration gradient region of the lithium-transition metal composite oxide can be measured by making EDX measurements in the manner described in paragraph [0112].

After the battery is discharged, the positive electrode is taken out, and the positive electrode is cleaned in the manner described above for the nonaqueous electrolyte secondary battery having a history of charge-discharge, a value of the average particle size ($D_{50}$) can be determined by carrying out a treatment in accordance with the procedure described below.

The positive active material is separated from the positive composite of the positive electrode. The positive composite often contains a conducting material and a binder. Examples of the method for removing a binder from the positive composite include a method in which a solvent capable of dissolving the binder is used. For example, when the binder is thought to be polyvinylidene fluoride, mention is made of a method in which the positive composite is immersed in a sufficient amount of N-methylpyrrolidone, heated at 150°C for several hours, and then separated into a powder containing the positive active material and a solvent containing the binder by filtration or the like. For example when the conducting material is thought to be a carbonaceous material such as acetylene black, examples of the method for removing the conducting material from the powder containing the positive active material, from which the binder is removed in the manner described above, include a method in which the carbonaceous material is oxidatively decomposed to be removed by a heat treatment. Conditions for the heat treatment are required to include a temperature at which the conducting material is thermally decomposed in an atmosphere including oxygen, or higher, but if the heat treatment temperature is too high, the properties of the positive active material may be changed, and therefore such a temperature is desirable that has no influences on the properties of the positive active material wherever possible. For example, in the case of the positive active material of the present invention, this temperature may be 700°C in the air.

By measuring the positive active material thus obtained for the particle size in the manner described in paragraph [0114], a value of the average particle size ($D_{50}$) can be determined.

However, in the process of assembly of the battery and the process of charge-discharge of the battery, some positive active material particles may be broken. By making a SEM observation of a positive electrode plate taken out from the battery, an approximate ratio at which the positive active material is broken can be known. When it can be predicted that broken positive active material particles are included, the average particle size ($D_{50}$) is determined after data is corrected so that particles of 2 $\mu$m or less are excluded in a particle size distribution curve obtained from measurement for excluding a fine powder generated due to breakage.

In the present invention, it can be said in view of examples described above that a lithium-transition metal composite oxide having a core and a coated part satisfies the requirement that "the ratio of cobalt present in the coated part be 3 to 10% in terms of a molar ratio based on the amount of the transition metal present in the core", so that a nonaqueous electrolyte secondary battery using this lithium-transition metal composite oxide as an active material has improved high rate discharge characteristics.

Also, it can be said that a lithium-transition metal composite oxide having a core and a coated part satisfies the requirement that "the coated part have a gradient of the cobalt concentration, and when the position of the surface is 0 and the position of the center is 1 in the particle, the start point of a cobalt concentration gradient region from the particle surface be situated at 0.1 to 0.5", so that a nonaqueous electrolyte secondary battery using this lithium-transition metal composite oxide as an active material has improved high rate discharge characteristics and cycle performance of high rate discharge. Further, it can be said that by using particles of 8 $\mu$m or less as an active material, the power characteristics as well as the high rate discharge characteristics are improved.

A nonaqueous electrolyte secondary battery using an active material of the present invention is excellent in high rate discharge characteristics, and therefore can be effectively used as nonaqueous electrolyte secondary batteries of power sources for electric automobiles, power sources for electronic devices, power sources for electric power storage and so on.

**Claims**

1. An active material for a nonaqueous electrolyte secondary battery, comprising a lithium-transition metal composite oxide which has an $\alpha$-NaFeO$_2$-type crystal structure and of which the average composition is represented by the composition formula of $Li_{1+\alpha}Me_{1-\alpha}O_2$ (Me is a transition metal containing Co, Ni and Mn; and $\alpha > 0$), **characterized in that** the lithium-transition metal composite oxide is a particle having a core and a coated part, the cobalt concentration of the coated part is higher than the cobalt concentration of the core, the manganese concentration of the coated part is lower than the manganese concentration of the core, and the ratio of cobalt present in the coated part is 3 to 10% in terms of a molar ratio based on the amount of the transition metal present in the core.

2. The active material for a nonaqueous electrolyte secondary battery according to claim 1, **characterized in that** the lithium-transition metal composite oxide is formed by mixing a coprecipitation precursor of a transition metal compound and a lithium compound and firing the mixture.

3. The active material for a nonaqueous electrolyte secondary battery according to claim 1, **characterized in that** the coated part has a cobalt concentration gradient, and when the position of the surface is 0 and the position of the center is 1 in the particle, the start point of a cobalt concentration gradient region from the particle surface is situated at 0.1 to 0.5.

4. The active material for a nonaqueous electrolyte secondary battery according to claim 3, **characterized in that** a particle size, at which a cumulative volume in a particle size distribution of the lithium-transition metal composite oxide particles is 50%, is 8 $\mu$m or less.

5. The active material for a nonaqueous electrolyte secondary battery according to claim 3, **characterized in that** the lithium-transition metal composite oxide is formed by mixing a coprecipitation precursor of a transition metal compound and a lithium compound and firing the mixture.

6. A method for production of the active material for a nonaqueous electrolyte secondary battery according to claim 1 or 2, **characterized in that** the lithium transition metal composite oxide is produced through a step of preparing coprecipitation precursor core particles by coprecipitating in an aqueous solution a transition metal compound containing cobalt, nickel and manganese and containing manganese in an amount larger than that of cobalt in terms of a molar ratio; a step of coating the coprecipitation precursor core particles with a compound containing cobalt, a compound containing cobalt and nickel, or a compound containing cobalt, nickel and manganese and containing cobalt in an amount larger than that of manganese in terms of a molar ratio, in the presence of an aqueous solution containing ammonia; and a step of mixing, with a lithium compound, coprecipitation precursor particles formed by coating the coprecipitation precursor core particles with the compound, and firing the mixture.

7. A method for production of the active material for a nonaqueous electrolyte secondary battery according to any one of claims 3 to 5, **characterized** in **that** the lithium transition metal composite oxide is produced through a step of preparing coprecipitation precursor particles of a transition metal compound, which has a cobalt concentration gradient region from the particle surface, by adding, in the course of preparation of a coprecipitation precursor from a first aqueous solution of a transition metal compound containing cobalt, nickel and manganese, a second aqueous solution of a transition metal compound, which contains cobalt, nickel and manganese and has a higher cobalt concentration and a lower manganese concentration as compared to the first aqueous solution; and a step of mixing the coprecipitation precursor particles with a lithium compound, and firing the mixture.

8. An electrode for a nonaqueous electrolyte secondary battery which comprises the active material for a nonaqueous electrolyte secondary battery according to any one of claims 1 to 5.

9. A nonaqueous electrolyte secondary battery comprising the electrode for a nonaqueous electrolyte secondary battery according to claim 8.

**Patentansprüche**

1. Aktivmaterial für eine Sekundärbatterie mit einem nicht-wässrigen Elektrolyt, mit:

einem Lithium-Übergangsmetall-Mischoxid, das eine Kristallstruktur des $\alpha$-NaFeO$_2$-Typs aufweist und dessen mittlere Zusammensetzung durch die Zusammensetzungsformel $Li_{1+\alpha}Me_{1-\alpha}O_2$ dargestellt ist (wobei Me ein Übergangsmetall ist, das Co, Ni und Mn enthält, und wobei $\alpha > 0$ ist);
**dadurch gekennzeichnet, dass** das Lithium-Übergangsmetall-Mischoxid ein Partikel mit einem Kern und einem beschichteten Teil ist, wobei die Kobaltkonzentration des beschichteten Teils höher ist als die Kobaltkonzentration des Kerns, die Mangankonzentration des beschichteten Teils niedriger ist als die Mangankonzentration des Kerns und der Anteil des im beschichteten Teil enthaltenen Kobalts 3 bis 10 Mol-% basierend auf dem Anteil des im Kern enthaltenen Übergangsmetalls beträgt.

2. Aktivmaterial nach Anspruch 1, **dadurch gekennzeichnet, dass** das Lithium-Übergangsmetall-Mischoxid durch Mischen eines Copräzipitationsvorläufers einer Übergangsmetallverbindung und einer Lithiumverbindung und durch Brennen des Gemischs hergestellt wird.

3. Aktivmaterial nach Anspruch 1, **dadurch gekennzeichnet, dass** der beschichtete Teil einen Kobaltkonzentrationsgradienten aufweist, wobei, wenn die Position der Oberfläche 0 und die Position der Mitte des Partikels 1 betragen, der Ausgangspunkt eines Kobaltkonzentrationsgradientenbereichs bezüglich der Partikeloberfläche bei 0,1 bis 0,5 liegt.

4. Aktivmaterial nach Anspruch 3, **dadurch gekennzeichnet, dass** eine Partikelgröße, bei der ein kumulatives Volumen in einer Partikelgrößenverteilung der Lithium-Übergangsmetall-Mischoxidpartikel 50% beträgt, 8 $\mu$m oder weniger beträgt.

5. Aktivmaterial nach Anspruch 3, **dadurch gekennzeichnet, dass** das Lithium-Übergangsmetall-Mischoxid durch Mischen eines Copräzipitationsvorläufers einer Übergangsmetallverbindung und einer Lithiumverbindung und durch Brennen des Gemischs hergestellt wird.

6. Verfahren zum Herstellen des Aktivmaterials für eine Sekundärbatterie mit einem nicht-wässrigen Elektrolyt nach Anspruch 1 oder 2,
   **dadurch gekennzeichnet, dass**
   das Lithium-Übergangsmetall-Mischoxid hergestellt wird durch
   einen Schritt zum Herstellen von Copräzipitationsvorläuferkernpartikeln durch Copräzipitation einer Übergangsmetallverbindung in einer wässrigen Lösung, wobei die Übergangsmetallverbindung Kobalt, Nickel und Mangan enthält, wobei der Mangananteil bezüglich des Molverhältnisses größer ist als der Kobaltanteil;
   einen Schritt zum Beschichten der Copräzipitationsvorläuferkernpartikel mit einer Verbindung, die Kobalt enthält, einer Verbindung, die Kobalt und Nickel enthält, oder einer Verbindung, die Kobalt, Nickel und Mangan enthält, wobei der Kobaltanteil bezüglich des Molverhältnisses größer ist als der Mangananteil, in Gegenwart einer wässrigen Lösung, die Ammoniak enthält; und
   einen Schritt zum Mischen von Copräzipitationsvorläuferpartikeln, die durch Beschichten der Copräzipitationsvorläuferkernpartikel mit der Verbindung hergestellt werden, mit einer Lithiumverbindung und zum Brennen des Gemischs.

7. Verfahren zum Herstellen des Aktivmaterials für eine nicht-wässrige Elektrolyt-Sekundärbatterie nach einem der Ansprüche 3 bis 5,
   **dadurch gekennzeichnet, dass**
   das Lithium-Übergangsmetall-Mischoxid hergestellt wird durch
   einen Schritt zum Herstellen von Copräzipitationsvorläuferpartikeln aus einer Übergangsmetallverbindung, die einen Kobaltkonzentrationsgradientenbereich von der Partikeloberfläche aufweist, durch Zugabe einer zweiten wässrigen Lösung einer Übergangsmetallverbindung, die Kobalt, Nickel und Mangan enthält, im Verlauf der Herstellung eines Copräzipitationsvorläufers von einer ersten wässrigen Lösung einer Übergangsmetallverbindung, die Kobalt, Nickel und Mangan enthält, wobei die zweite wässrige Lösung eine höhere Kobaltkonzentration und eine niedrigere Mangankonzentration hat als die erste wässrige Lösung; und
   einen Schritt zum Mischen der Copräzipitationsvorläuferpartikel mit einer Lithiumverbindung und zum Brennen der Mischung.

8. Elektrode für eine Sekundärbatterie mit einem nicht-wässrigen Elektrolyt, die das Aktivmaterial für eine Sekundärbatterie mit einem nicht-wässrigen Elektrolyt nach einem der Ansprüche 1 bis 5 aufweist.

9. Sekundärbatterie mit einem nicht-wässrigen Elektrolyt, mit der Elektrode für eine Sekundärbatterie mit einem nicht-wässrigen Elektrolyt nach Anspruch 8.

**Revendications**

1. Matériau actif pour batterie secondaire à électrolyte non aqueux, comprenant un oxyde de composite lithium-métal de transition qui présente une structure cristalline de type $\alpha$ - NaFeO$_2$ et dont la composition moyenne est représentée par la formule de composition Li$_{1+\alpha}$Me$_{1-\alpha}$O$_2$ (Me est un métal de transition comprenant Co, Ni et Mn ; et $\alpha$ > 0), **caractérisé en ce que** l'oxyde de composite lithium-métal de transition est une particule ayant un noyau et une partie revêtue, la concentration en cobalt de la partie revêtue est supérieure à la concentration en cobalt du noyau, la concentration en manganèse de la partie revêtue est inférieure à la concentration en manganèse du noyau, et le rapport de cobalt présent dans la partie revêtue est de 3 à 10% en termes de rapport molaire en se basant sur la quantité du métal de transition présent dans le noyau.

2. Matériau actif pour batterie secondaire à électrolyte non aqueux selon la revendication 1, **caractérisé en ce que** l'oxyde de composite lithium-métal de transition est formé par mélange d'un précurseur de coprécipitation d'un composé métal de transition et d'un composé lithium, et cuisson du mélange.

3. Matériau actif pour batterie secondaire à électrolyte non aqueux selon la revendication 1, **caractérisé en ce que** la partie revêtue présente un gradient de concentration en cobalt, et quand la position de la surface est 0 et que la position du centre est 1 dans la particule, le point de départ d'une région de gradient de concentration en cobalt depuis la surface de la particule est situé à 0,1 à 0,5.

4. Matériau actif pour batterie secondaire à électrolyte non aqueux selon la revendication 3, **caractérisé en ce qu'**une taille de particule, à laquelle un volume cumulé dans la distribution des tailles de particules des particules d'oxyde de composite lithium-métal de transition est de 50%, est de 8 $\mu$m ou moins.

5. Matériau actif pour batterie secondaire à électrolyte non aqueux selon la revendication 3, **caractérisé en ce que** l'oxyde de composite lithium-métal de transition est formé par mélange d'un précurseur de coprécipitation d'un composé métal de transition et d'un composé lithium, et cuisson du mélange.

6. Procédé de production du matériau actif pour batterie secondaire à électrolyte non aqueux selon la revendication 1 ou 2, **caractérisé en ce que** l'oxyde de composite lithium-métal de transition est produit via une étape de préparation de particules noyau précurseur de coprécipitation par coprécipitation dans une solution aqueuse d'un composé métal de transition comprenant du cobalt, du nickel et du manganèse et comprenant du manganèse dans une quantité plus grande que celle du cobalt en termes de rapport molaire ; une étape de revêtement des particules noyau précurseur de coprécipitation avec un composé comprenant du cobalt, un composé comprenant du cobalt et du nickel ou un composé comprenant du cobalt, du nickel et du manganèse, et comprenant du cobalt dans une quantité supérieure à celle du manganèse en termes de rapport molaire, en présence d'une solution aqueuse contenant de l'ammoniaque ; et une étape de mélange, avec un composé lithium, des particules précurseurs de coprécipitation formées par revêtement des particules noyau précurseur de coprécipitation avec le composé, et cuisson du mélange.

7. Procédé de production du matériau actif pour batterie secondaire à électrolyte non aqueux selon l'une quelconque des revendications 3 à 5, **caractérisé en ce que** l'oxyde de composite lithium-métal de transition est produit via une étape de préparation de particules précurseur de coprécipitation d'un composé métal de transition, qui présente une région de gradient de concentration en cobalt depuis la surface de la particule, en ajoutant, au cours de la préparation d'un précurseur de coprécipitation à partir d'une première solution aqueuse d'un composé métal de transition comprenant du cobalt, du nickel et du manganèse, une seconde solution aqueuse d'un composé métal de transition qui comprend du cobalt, du nickel et du manganèse et présente une concentration en cobalt supérieure et une concentration en manganèse inférieure en comparaison à la première solution aqueuse ; et une étape de mélange des particules précurseurs de coprécipitation avec un composé lithium, et de cuisson du mélange.

8. Electrode pour batterie secondaire à électrolyte non aqueux qui comprend le matériau actif pour batterie secondaire à électrolyte non aqueux selon l'une quelconque des revendications 1 à 5.

9. Batterie secondaire à électrolyte non aqueux comprenant l'électrode pour batterie secondaire à électrolyte non aqueux selon la revendication 8.

# FIG. 1

### Precursor core particle preparing step

Reaction tank (pH = 7.9, 50°C)     Mn Rich compound (core)
                                    (Co,Ni,Mn) Sulfate

### Coated precursor particle preparing step

Reaction tank (pH = 7.9, 50°C)  Mn Rich compound (core)  (coat)
                                (Co,Ni,Mn) Sulfate    Sulfate containing Co

# FIG. 2

### Precursor preparing step

### Step 1

Reaction tank (pH = 7.9, 50℃)    Mn Rich compound (core)

(Co,Ni,Mn) Sulfate

### Step 2

Reaction tank (pH = 7.9, 50℃) Mn Rich compound (core)    Co Rich compound (coat)

(Co,Ni,Mn) Sulfate    (Co,Ni,Mn) Sulfate

# FIG. 3

15kU X10.000 1μm

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010086690 A
- JP 2011134670 A
- JP 2011134708 A
- JP 2011086603 A
- JP 2010080231 A
- JP 2007213866 A
- JP 2006302880 A
- JP 2012018827 A
- EP 2405521 A1
- US 2011076564 A1
- JP 2009193686 A